Europäisches Patentamt

European Patent Office

Office européen des brevets

(19)

(11) Veröffentlichungsnummer: **0 208 139**
**B1**

(12) EUROPÄISCHE PATENTSCHRIFT

(45) Veröffentlichungstag der Patentschrift: 14.03.90

(21) Anmeldenummer: 86107612.3

(22) Anmeldetag: 04.06.86

(51) Int. Cl.⁵: **B 29 B 7/48, B 01 J 19/20**

(54) **Wellenabdichtungsanordnung, insbesondere für eine Vorrichtung zur kontinuierlichen Verarbeitung hochviskoser Medien.**

(30) Priorität: 08.06.85 DE 3520662

(43) Veröffentlichungstag der Anmeldung:
14.01.87 Patentblatt 87/03

(45) Bekanntmachung des Hinweises auf die
Patenterteilung:
14.03.90 Patentblatt 90/11

(84) Benannte Vertragsstaaten:
AT BE CH DE FR GB IT LI LU NL SE

(56) Entgegenhaltungen:
DE-B-1 246 223
DE-C-1 111 154
GB-A-1 088 037
US-A-3 154 808
US-A-3 199 145
US-A-4 500 093

CHEMIE-INGENIEUR-TECHNIK, 36. Jahrgang,
Nr. 11, 1964 , Seiten 1134-1136, Weinheim,
Bergstrasse; H. SCHNARKOWSKI
"Gleitringdichtungen an Kesseln für chemische
Reaktionen"

(73) Patentinhaber: Fritsch, Rudolf P.
Goslarerstrasse 58
D-7000 Stuttgart 31 (DE)

(72) Erfinder: Fritsch, Rudolf P.
Goslarerstrasse 58
D-7000 Stuttgart 31 (DE)

(74) Vertreter: Rüger, Rudolf, Dr.-Ing. et al
Webergasse 3 Postfach 348
D-7300 Esslingen/Neckar (DE)

**Beschreibung**

Die Erfindung betrifft eine Vorrichtung zur kontinuierlichen Verarbeitung hochviskoser Medien, insbesondere zur Herstellung hochmolekularer Polymere, beispielsweise der Kondensation von Polyester, die wenigstens zwei jeweils zusammenwirkende Bearbeitungswerkzeuge tragende parallele Wellen aufweist, denen Zu- und Abführeinrichtungen für das Verarbeitungsgut sowie ein mit Unterdruck beaufschlagbarer Reaktionsraum zugeordnet sind, welcher auf wenigstens einer Seite durch einen Gehäuseabschnitt begrenzt ist, der Durchführungseinrichtungen für die mit einem sie antreibenden außen angeordneten Verteilergetriebe kuppelbaren Wellen aufweist, wobei der Reaktionsraum im Bereiche der Wellendurchführungseinrichtungen über wenigstens eine Gleitringdichtung enthaltende Dichtmittel gegen einen die Wellenenden umgebenden, außen liegenden Sperrflüssigkeitsraum abgedichtet ist, der eine Sperrflüssigkeit enthält.

Eine derartige Vorrichtung ist aus DE-A-3030541 bekannt. Bei solchen auch als Reaktoren bezeichneten Vorrichtungen, wie aber auch bei Mehrwellen-Mischern oder -Knetern zur Kunststoffherstellung, bei denen zum Zwecke der Entgasung ein mit Unterdruck beaufschlagter Reaktionsraum vorgesehen ist, tritt das Problem der Abdichtung zwischen dem Reaktorinneren und der Atmosphäre im Bereiche der Wellendurchführungen auf. Die Abdichtung ist deshalb schwierig, weil bei vielen dieser Reaktionsvorgänge mit Unterdruck gearbeitet wird, wobei bei der Kondensation von Polyester ein Hochvakuum bis zu 0,1 Torr zur Anwendung kommt.

Es ist bekannt, bei den Wellendurchführungen solcher Vorrichtungen spezielle Gleitringdichtungen zu verwenden und Sperrflüssigkeitsräume vorzusehen, die mit einer geeigneten Sperrflüssigkeit, bspw. gekühltem Wärmeträgeröl, gefüllt und mit Druck beaufschlagt sind. Aus Gründen der Lebensdauer werden dabei Gleitringdichtungen mit Gleitflächen aus Kohlenstoff und bspw. Silizium-Karbind eingesetzt (Chemie-Ing.Techn., 36. Jahrg. 1964/Nr.11, S.1134-1136).

Da Gleitringdichtungen funktionsbedingt wegen des axial federnd belasteten Dichtringes etwas "atmen" müssen, läßt es sich in der Praxis nicht vermeiden, daß Sperrflüssigkeit in den Reaktionsraum eingesaugt wird. Dies ist aber in vielen Fällen unerwünscht oder unzulässig. Das gilt insbesondere auch für eine Wellendichtungsanordnung für einen zur Polymerisation von Kunststoffen dienenden Reaktor (GB-A-1088 037), bei dem zwischen einem die Gleitringdichtungen enthaltenden und mit einer Sperrflüssigkeit gefülltem Raum und dem Reaktionsraum ein weiterer Gehäuseraum angeordnet ist, der zu dem Reaktionsraum hin durch eine die Welle umgebende Stopfbüchsen-Dichtung abgedichtet ist. Dieser weitere Raum ist mit Monomerem gefüllt, das unter einem niedrigerem Druck als die Sperrflüssigkeit gehalten ist, so daß eine geringe Leckströmung zu dem Reaktionsraum hin auftritt.

Aufgabe der Erfindung ist es deshalb, solche Reaktoren oder vergleichbaren Anorderungen ausgesetzte Vorrichtungen zu schaffen, die eine Wellenabdichtung aufweisen, welche eine einwandfreie Abdichtung eines Gehäuseinnenraumes und hier insbesondere eines mit Unterdruck beaufschlagten Reaktionsraumes zur Atmosphäre hin bei langer Lebensdauer und einfacher Wartung gewährleistet, während gleichzeitig ein Eindringen von Sperrflüssigkeit oder anderen, unerwünschten Verunreinigungen in den abgedichteten Gehäuseinnenraum mit Sicherheit ausgeschlossen ist.

Zur Lösung dieser Aufgabe ist die eingangs genannte Vorrichtung erfindungsgemäß dadurch gekennzeichnet, daß auf der dem Reaktionsraum zugewandten Seite, an die Dichtmittel anschließend, jede Welle von einem Inertgaspolster umgeben ist, das einen höheren Druck als die Sperrflüssigkeit aufweist und gegen den Reaktionsraum durch die Wellen über einen Abschnitt ihrer Länge umgebende Gehäuseteile sowie durch die Wellen umgebendes, unter Druck stehendes Verarbeitungsgut abgedichtet begrenzt ist.

Das Inertgaspolster verhindert zufolge eines höheren Druckes das Eindringen von Sperrflüssigkeit über die Dichtmittel und gegebenenfalls vorhandene Wellen-Radiallager in den abgedichteten Raum.

Da das Inertgaspolster längs der Wellen zu dem abgedichteten Raum hin — abgesehen von den die Wellen abschnittsweise umgebenden Gehäuseteilen — durch unter Druck stehendes Verarbeitungsgut selbst abgedichtet ist, sind auf dieser Seite des Inertgaspolsters keine eigenen, Verschleiß unterliegenden Dichteinrichtungen, bspw. Gleitringdichtungen oder dergl., erforderlich. Gleichzeitig verhindert das Inertgaspolster, daß Unterdruck aus dem Reaktionsraum zu den Dichtmitteln gelangen und dort wirksam werden kann. Im Betrieb in den Reaktionsraum mitgeförderte kleine Inertgasmengen sind unschädlich; sie werden von den den Reaktionsraum mit Unterdruck beaufschlagenden Vakuumpumpen etc. mit abgesaugt.

Das Inertgaspolster ist zweckmäßigerweise jeweils anschließend an eine Gleitringdichtung der Dichtmittel angeordnet.

Um zu verhindern, daß die Gleitringdichtung infolge trockener Reibungsverhältnisse vorzeitig verschleißt, kann die Anordnung derart getroffen werden, daß das Inertgaspolster auf einem oberhalb der Gleitringdichtflächen der Gleitringdichtung liegenden Flüssigkeitsspiegel einer die Gleitringdichtung versorgenden Schmierflüssigkeit wirksam ist. Durch den Druckunterschied wird zwischen den Gleitringdichtflächen ein Schmierflüssigkeitsfilm wirksam, der für Mischreibung sorgt und damit eine unbeschränkte Lebensdauer der Gleitringdichtung sicherstellt, zumal sich Feststoffe im Bereiche der Gleitringdichtung nicht bilden können, wenn eine geeignete Schmierflüssigkeit verwendet wird. Als eine solche hat sich ein inertes Schmiermittel mit einer Dauertemperaturbeständigkeit von 280°C bewährt.

Vorteilhaft ist es, wenn die Wellenabdichtungsanordnung der Vorrichtung einen Flüssigkeitsfördermittel enthaltenden Kreislauf für die Schmierflüssigkeit aufweist, der mit dem Inertgaspolster und gegebenenfalls mit einer Inertgasquelle in Verbindung steht und über eine Einrichtung zur Einstellung des Schmierflüssigkeitsspiegels bezüglich der Gleitringdichtflächen geführt ist. Zusätzlich kann der Kreislauf mit Einrichtungen zur Überwachung des Auftretens eines Schmierflüssigkeitsverlustes und zum Ersatz fehlender Schmierflüssigkeit verbunden sein.

Die Schmierung von Gleitringdichtungen der Wellenabdichtungsanordnung, die von dem Reaktionsraum weiter entfernt angeordnet sind, kann ebenfalls in verhältnismäßig einfacher Weise sichergestellt werden. So können die antriebsseitigen Wellenenden von Schmierflüssigkeit umgeben sein, deren Flüssigkeitsspiegel oberhalb der Gleitringdichtflächen einer in diesem Bereich angeordneten Gleitringdichtung liegt.

Bei höherer Beanspruchung ist es vorteilhaft, wenn wenigstens ein Teil der Dichtelemente der Gleitringdichtungen zumindest teilweise von einer Wärmeträgerflüssigkeit umströmt ist. Gegebenenfalls können die Gleitringdichtflächen der entsprechenden Gleitringdichtungen dann unmittelbar mit dieser Wärmeträgerflüssigkeit geschmiert sein. .

Die Schmierflüssigkeit kann über die Gleitringflächen in geringer Menge in die Sperrflüssigkeitsräume eindringen und sich mit der Sperrflüssigkeit vermischen, was unschädlich ist. Es ist nun möglich, die dadurch bedingte Sperrflüssigkeitsvolumenzunahme zu überwachen; wenn die Volumenzunahme ein bestimmtes Maß pro Zeiteinheit überschreitet, ist dies ein Anzeichen für unzulässigen oder übermäßigen Dichtungsverschleiß.

Auf diese Weise ist eine einwandfreie Überwachung der Abdichtung gewährleistet, ohne daß dazu ein besonderer Aufwand getrieben werden müßte oder daß überraschende Betriebsunterbrechungen bei fehlender Überwachung in Kauf genommen werden müßten.

Als Inertgas kann in der Regel Stickstoff verwendet werden, doch kann, abhängig von dem jeweiligen Verarbeitungsgut, auch ein anderes zweckentsprechendes, gasförmiges Medium zum Einsatz kommen.

Um den für die Abdichtung des Inertgaspolsters erforderlichen Druck des Verarbeitungsgutes in dem an das Inertgaspolster anschließenden Bereich zu erzielen, ist die Anordnung mit Vorzug derart getroffen, daß die Wellen vorzugsweise im Bereiche ihres Austrittes aus den sie umgebenden, mit den Zuführeinrichtungen für das Verarbeitungsgut in Verbindung stehenden Gehäuseteilen Drossel- oder Rückförderelemente tragen, die dem ihnen in Wellenlängsrichtung zugeförderten Verarbeitungsgut entgegenwirken und durch die das Verarbeitungsgut in dem an das Inertgaspolster anschließenden Bereich unter einen vorbestimmten Rückdruck setzbar ist. Einfache konstruktive Verhältnisse ergeben sich dabei, wenn die Rückförderelemente als von den Gehäuseteilen zumindest teilweise umschlossene Förderschnecken ausgebildet sind, deren Gänge gegenläufig zu den Gängen von ihnen in den Gehäuseteilen vorgeordneten, koaxialen Förderschnecken angeordnet sind, wobei der von den Förderschnecken erzeugte Förderdruck größer ist als der von dem Rückförderelementen erzeugte Rückdruck. Die Förderelemente "schieben" somit das Verarbeitungsgut durch die Schneckengänge der ihnen nachgeordneten, im Gegensinne wirkenden Rückförderschnecken hindurch. Durch entsprechende Bemessung insbesondere der axialen Länge, aber auch der Steigung und der Gestaltung der Schneckengänge der Förder- und Rückförderschnecken kann in dem an das Inertgaspolster anschließenden "Abdichtungsbereich" mit einfachen Mitteln selbsttätig jeder gewünschte Druck in dem geförderten Verarbeitungsgut erzeugt werden.

Im übrigen kann das Inertgaspolster anschließend an die Dichtmittel in einem die Wellen jeweils umgebenden Raum ausgebildet sein, der mit einer Inertgasquelle in Verbindung steht und einseitig durch einen Ringspalt zu dem Verarbeitungsgut hin begrenzt ist. Der Ringspalt bildet eine Drosselstelle und verhindert das unbeabsichtigte Eindringen von Verarbeitungsgut in den unmittelbar an die Dichtmittel angrenzenden Raum.

Bei kranzartig angeordneten und mit ihren Bearbeitungselementen kämmend ineinandergreifenden Wellen — wie es bspw. aus der DE-PS 30 30 541 bekannt ist — können die Wellen im Bereiche ihres Austritts aus den sie umschließenden Gehäuseteilen unter Ausbildung definierter Spalte miteinander kämmend im axialen Abstand voneinander stapelartig angeordnete, als Drosselelemente wirkende, vorzugsweise kreisrunde Scheiben tragen, durch die das geförderte Verarbeitungsgut zu Dünnschichten ausbreitbar ist. Bei solchen Vorrichtungen wird nämlich das Verarbeitungsgut in den mit Unterdruck beaufschlagten, von den kranzförmig angeordneten Wellen rings umgebenen Reaktionsraum in Gestalt von Dünnschichten eingebracht, wodurch es eine besonders wirksame Bearbeitung und Entgasung erfährt. Die am Austritt der Wellen aus den sie zuführseitig umgebenden Gehäuseteilen angeordneten, ineinandergreifenden Scheiben verhindern, daß Verarbeitungsgut als Dickschicht in den Reaktionsraum gelangt. Gleichzeitig ergeben die Spalte zwischen den miteinander kämmenden Scheiben vollständig ausfüllenden dünnen Schichten des Verarbeitungsgutes eine einwandfreie Abdichtung des Inertgaspolsters und als Drosselstellen einen Rückdruck. Aus dem erwähnten Grunde ist es auch zweckmäßig, wenn die Scheiben jedes Stapels auf ihrer dem Reaktionsraum zugewandten Innenseite lediglich über einen Teil der axialen Stapellänge von Gehäuseteilem umgeben sind, während sie auf ihrer Außenseite über die gesamte axiale Stapellänge mit Spiel von Gehäuseteilem umgeben sein können.

Um den von den Drossel- oder Rückförderelementen herrührenden Druck (Rückdruck) in dem an das Inertgaspolster anschließenden, das Inertgaspolster gegen den Reaktionsraum abdichtenden Verarbeitungsdruck der jeweiligen Viskosität des Verarbeitungsgutes anpassen zu können, ohne daß dazu die Drossel- oder Rückförderelemente ausgebaut und ausgetauscht werden, ist es vorteilhaft, wenn die die Drossel- oder Rückförderelemente umgebenden Gehäuseteile bezüglich der Drossel- oder Rückförderelemente unter Veränderung des erzeugten Rückdruckes axial verstellbar sind. Diese Verstellung kann innerhalb vorgegebener Grenzwerte insbesondere stufenlos geschehen und läßt die Notwendigkeit für Umbauarbeiten vollkommen entfallen. Durch die Axialverstellung werden die Drosseloder Rückförderelemente über einen größeren oder kleineren Teil ihrer axialen Länge an ihrer Außenumfangsfläche teilweise freigelegt, wodurch die von ihnen ausgehende Rückförderoder Drosselwirkung entsprechend verändert wird.

Bei hohen Anforderungen an die Wellenabdichtung, bspw. bei Vorrichtungen, deren Reaktionsraum mit Hochvakuum beaufschlagt ist, können die Dichtmittel zwei in Achsrichtung hintereinander angeordnete Gleitringdichtungen aufweisen, von denen jeder ein Sperrflüssigkeit enthaltender Sperrflüssigkeitsraum zugeordnet ist.

Die Sperrflüssigkeit kann gleichzeitig zur Kühlung der Gleitringdichtungen dienen. Um sicher zu stellen, daß alle Gleitringdichtungsteile gleichzeitig und gleichmäßig von allen Seiten mit Sperrflüssigkeit umspült werden und eine ordnungsgemäße Wärmeabfuhr gegeben ist, kann die Anordnung mit Vorteil derart getroffen sein, daß jeder Sperrflüssigkeitsraum eine in seinem unteren Teil mündende Sperrflüssigkeitszuführeinrichtung und eine von seinem oberen Teil abgehende Sperrflüssigkeitsabführeinrichtung enthält und daß die Sperrflüssigkeitszu- und -abführeinrichtung in einem eine geregelte Kühleinrichtung enthaltenden Sperrflüssigkeitskreislauf liegen, durch den die Sperrflüssigkeit umwälzbar ist.

Zwischen den beiden Gleitringdichtungen kann zusätzlich für jedes Wellenende ein Radiallager angeordnet sein, das einerseits eine gewisse, leckagebehaftete "Absperrung" zwischen dem Sperrflüssigkeitszu- und -ablauf über die beiden strömungsmäßig hintereinanderliegenden Sperrflüssigkeitsräume gewährleistet, wobei die durch das Radiallager durchtretende kleine Sperrflüssigkeitsmenge gleichzeitig als Lagerschmierung dient; andererseits bewirkt das Radiallager eine Radialführung der Wellen, so daß die beidseitig dieses Radiallagers angeordneten Gleitringdichtungen entsprechend gut radial geführt sind. Schließlich sorgt das Radiallager dafür, daß die Wellen im Betriebszustand nicht ausknicken können und daß, wenn der gesamte eigentliche Reaktorkörper zusammen mit den Wellen und den Wellendurchführungseinrichtungen zu Reinigungszwecken von dem Verteilergetriebe abgenommen und aus dem zugeordneten Gehäuse herausgezogen wird, die Gleitringdichtungen in ihrer jeweiligen Betriebslage bleiben.

Die Radiallager und/oder zumindest ein Teil der Dichtelemente der Gleitringdichtungen können zumindest teilweise von einer die hohlen Wellen durchströmenden Wärmeträgerflüssigkeit umströmt sein, die zur Kühlung dieser Teile beiträgt und gegebenenfalls im Bereiche der Gleitringdichtflächen mit dieser geschmiert ist.

Bei der Verwendung von Wärmeträgerölen als Sperrflüssigkeit ist es unvermeidbar, daß die den Sperrflüssigkeitsraum gegen die Atmosphäre abdichtenden Gleitringdichtungen zufolge ihrer atmenden Eigenschaften geruchsbildende Stoffe an die Atmosphäre abgeben, was unerwünscht ist. Außerdem ist zu vermeiden, daß Luft von außen her in den unter Unterdruck stehenden Sperrflüssigkeitsraum eingesaugt werden kann, während andererseits, wie bereits erwähnt, diese die Abdichtung zur Atmosphäre hin bewirkenden Gleitringdichtungen bei höherer Belastung eine zuverlässige Schmierung benötigen. Um dies zu gewährleisten, können in bereits erläuterter Weise die antriebsseitigen Wellenenden von (inerter) Schmierflüssigkeit umgeben sein, deren Flüssigkeitsspiegel oberhalb der Gleitringdichtflächen der entsprechenden Gleitringdichtung liegt und damit nach außen hin zur Atmosphäre als zusätzliche Sperre wirkt. Der diese Schmierflüssigkeit enthaltende Raum kann auch an den Schmierflüssigkeitskreislauf für eine näher dem Inertgaspolster liegende oder unmittelbar an diese anschließende Gleitringdichtung angeschlossen sein, wobei der Schmierflüssigkeitsspiegel für diese Gleitringdichtung ebenfalls durch eine entsprechende Einrichtung auf einem vorbestimmten Niveau oberhalb der Gleitringdichtflächen gehalten werden kann.

Schließlich kann jede der Gleitringdichtungen als Doppeldichtung mit zwei im axialen Abstand angeordneten, gehäusefesten Dichtelementen und zwei an diesen in Achsrichtung federnd angedrückten Dichtringen ausgebildet sein, deren Dichtringe axial federnd gegeneinander verspannt sind.

Die mit den gehäusefesten Dichtelementen zusammenwirkenden Dichtringe der Gleitringdichtungen wurden bisher auf der Welle mittels radialer Madenschrauben drehfest fixiert. Wenn bspw. bei Stromausfall die verhältnismäßig eng aneinanderliegenden Wellen in einer ungünstigen Drehwinkelstellung stehen bleiben, können diese bei den dann zur Reinigung des Reaktors von erstarrtem Verarbeitungsgut notwendigen Demontagearbeiten die radialen Madenschrauben von der jeweils benachbarten Welle abgedeckt und damit unzugänglich sein. Auch gestattet es diese Art der Verankerung der Dichtringe auf der Welle nicht, die erforderlichen hohen Anpreßdrücke im Bereiche der Dichtflächen zu erzielen. Diesen Nachteilen kann dadurch abgehofen werden, daß die beiden Dichtringe jeweils über zwei Druckbüchsen axial verspannt sind, die durch Flansche und axial zugängliche Spannschrauben miteinander verbunden sind, wobei die Flansche benachbarter Wellen sich mit Spiel aufeinander abwälzend ausgebildet und angeordnet sind.

Die meisten Kunststoffe werden nach ihrer Erzeugung zunächst granuliert und zwischengelagert, da sie noch nicht für die dem jeweiligen Einsatzzweck entsprechende Endverarbeitung geeignet sind. Speziell für Spritzgußartikel oder Folien vorgesehene Kunststoffe werden, von dem Granulat ausgehend, sodann wieder aufgeschmolzen und mit Zusatzstoffen (Additiven) versehen. Derartige Zusatzstoffe sind Stabilisatoren, Weichmacher, Antioxidantien, Füllstoffe, Farben, Fasern, Flammschutzmittel usw. Der Zusatz der Zusatzstoffe erfolgte bisher in eigens dafür entwickelten Kompoundiermaschinen, wobei der Kunststoff wieder in Granulatform übergeführt wird, von dem ausgehend er sodann in einer Spritzgußmaschine von neuem aufgeschmolzen und zu dem endgültigen Verbrauchsartikel verformt wird. Abgesehen von dem erheblichen zusätzlichen Energieaufwand für dieses wiederholte Aufschmelzen des Kunststoffes, leiden unter diesen Aufschmelzvorgängen auch die Eigenschaften des Kunststoffs.

Die neue Wellenabdichtung gestattet es hierbei nun, eine wesentliche Vereinfachung dadurch zu treffen, daß in dem an das Inertgaspolster anschließenden Bereich, auf die Zuführeinrichtung für das Verarbeitungsgut folgend, eine Zuführeinrichtung für Zusatzstoffe mündet, die einen die Zusatzstoffe enthaltenden gasdichten Vorratsbehälter aufweist, dessen Innenraum mit dem Druck des Inertgaspolsters beaufschlagt ist und mit diesem in Verbindung steht. Da das Inertgaspolster einen höheren Druck als die Atmosphäre aufweist, ist ausgeschlossen, daß beim Zusatz der Zusatzstoffe Luftsauerstoff in den Reaktionsraum bzw. die Schmelze gefördert wird, ohne daß dazu zusätzliche Maßnahmen ergriffen werden müßten. Das Inertgaspolster der Wellenabdichtung kann somit gleichzeitig dazu ausgenutzt werden, einen luftsauerstofffreien Zuschlag der Zusatzstoffe zu ermöglichen.

In der Zeichnung sind Ausführungsbeispiele des Gegenstandes der Erfindung dargestellt. Es zeigen:

Fig. 1 eine Vorrichtung ("Reaktor") zur Kondensation von Polyester gemäß der Erfindung, mit Wellenabdichtungsanordnungen, in axialen Schnitt, in einer Seitenansicht,

Fig. 2 einen oberen Abschnitt der Vorrichtung nach Fig. 1, im axialen Schnitt, in einer Seitenansicht und in einem anderen Maßstab,

Fig. 3 einen unteren Abschnitt der Vorrichtung nach Fig. 1, im axialen Schnitt, in einer Seitenansicht und in einem anderen Maßstab,

Fig. 4 ein Doppelgleitringlager der Vorrichtung nach Fig. 1, geschnitten längs der Linie IV-IV der Fig. 5, in einer Seitenansicht und im Ausschnitt,

Fig. 5 die Anordnung nach Fig. 4, geschnitten längs der Linie V-V der Fig. 4, in einer Draufsicht,

Fig. 6 die anschließend an die Rückförderelemente der Vorrichtung nach Fig. 1 angeordneten, kämmend ineinandergreifenden Scheiben dreier Wellen der Vorrichtung nach Fig. 1, in einer perspektivischen Teildarstellung, im Ausschnitt und in einem anderen Maßstab,

Fig. 7 die Anordnung nach Fig. 2, geschnitten längs der Linie VII-VII, in einer Draufsicht, in einem anderen Maßstab und in einer Teildarstellung,

Fig. 8 die Vorrichtung nach Fig. 1, mit Wellenabdichtungsanordnungen gemäß der Erfindung, in einer abgewandelten zweiten Ausführungsform, im axialen Schnitt, in einer Seitenansicht,

Fig. 9 einen oberen Abschnitt der Vorrichtung nach Fig. 1, im axialen Schnitt, in einer Seitenansicht und in einem anderen Maßstab, sowie in einer Darstellung entsprechend Fig. 2,

Fig. 10 die Anordnung nach Fig. 9, im Ausschnitt, unter Veranschaulichung der peripheren Zusatzeinrichtungen zu den Wellenabdichtungsanordnungen, im axialen Schnitt, in einer Seitenansicht, in einem anderen Maßstab und im Ausschnitt,

Fig. 11 einen anderen oberen Abschnitt der Vorrichtung nach Fig. 8, in einem Querschnitt, in einer Seitenansicht, in einem anderen Maßstab und im Ausschnitt, und

Fig. 12 einen unteren Abschnitt der Vorrichtung nach Fig. 1, im axialen Schnitt, in einer Seitenansicht und in einem anderen Maßstab sowie in einer Darstellung ähnlich Fig. 3.

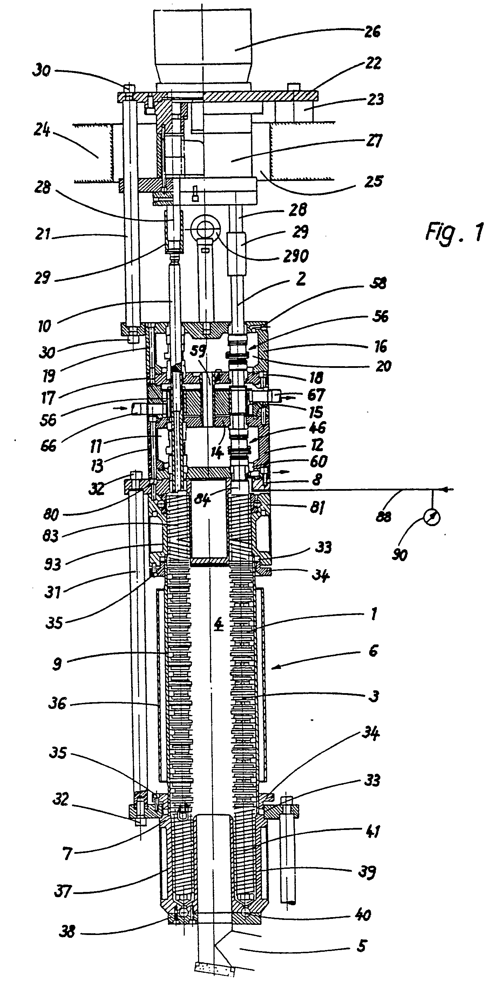

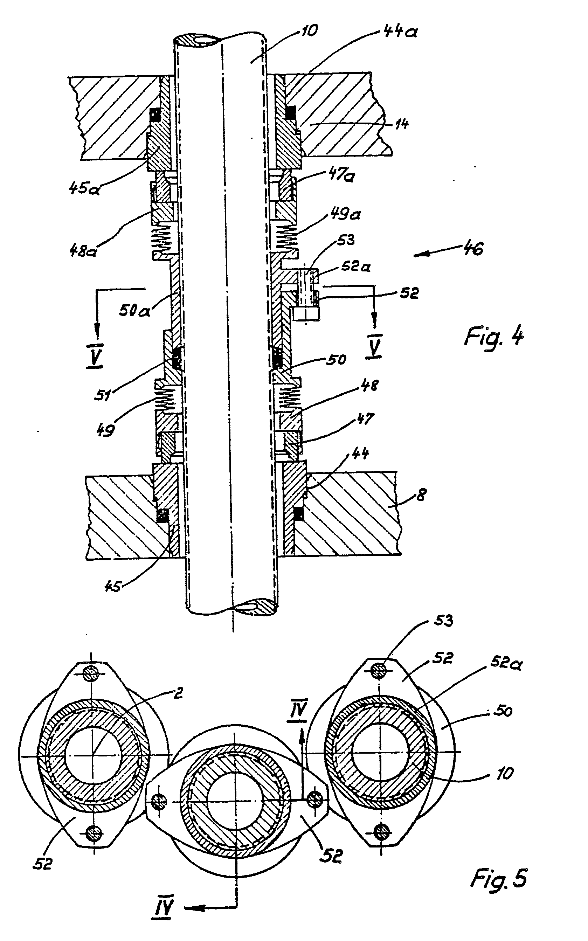

Die in den Figuren 1-7 dargestellte Vorrichtung zur Herstellung hochmolekularer Polymere, insbesondere zur Kondensierung von Polyester, weist zehn vertikal ausgerichtete, achsparallele Wellen 1 auf, die mit ihren Achsen 2 auf einem gemeinsamen gedachten Kreiszylinder liegend kranzartig angeordnet sind und von denen jede eine größere Anzahl in Achsrichtung hintereinander angeordneter und in parallelen Ebenen liegender scheibenartiger Bearbeitungselemente 3 trägt, deren Gestalt und Aufbau im einzelnen bspw. in der DE-PS 30 30 541 beschrieben ist und grundsätzlich der Gestalt der in Fig. 5 veranschaulichten Elemente entspricht. Mit diesen scheibenartigen Bearbeitungselementen 3 greifen benachbarte Wellen unter Ausbildung enger Spalte definierter Weite von ca. 0,5 mm kämmend ineinander. Gemeinsam mit den Wellen 1 umschließen die Bearbeitungselemente 3 einen Innenraum, der den Reaktionsraum 4 bildet und über einen Saugstutzen 5 an eine nicht weiter dargestellte Unterdruckquelle angeschlossen ist.

Die Wellen 1 sind von einem Gehäuse 6 gemeinsam umschlossen, das aus zwei ortsfesten, scheibenartigen Gehäuseabschnitten 7, 8 und einem rohrförmigen, zylindrischen Gehäusemantel 9 besteht, der endseitig durch die Gehäuseabschnitte 7, 8 abgedichtet ist. Dabei sind die Wellen 1 mit zylindrischen Wellenenden 10 durch entsprechende Bohrungen des Gehäuseabschnittes 8 hindurchgeführt und durch im einzelnen noch zu erläuternde Dichtmittel im Bereiche dieser Durchführungseinrichtungen abgedichtet, derart, daß das Eindringen von Luft oder Verunreinigungen in den von dem Gehäusemantel 9 umschlossenen Raum und insbesondere den Reaktionsraum 4 ausgeschlossen ist.

Auf den scheibenförmigen oberen Gehäuseabschnitt 8 ist ein einen ersten Sperrflüssigkeitsraum 11 enthaltendes, hohles, im wesentlichen zylindrisches Teilgehäuse 12 abgedichtet aufgesetzt, das mittels axialer Bolzen 13 mit dem Gehäuseabschnitt 8 verspannt ist und an dessen Stirnwand 14 sich ein zweites ringförmiges Teilgehäuse 15 abgedichtet anschließt. Auf das zweite Teilgehäuse 15 ist ein drittes Teilgehäuse 16 ebenfalls abgedichtet aufgesetzt, dessen scheibenförmige Bodenwand 17 mit dem zweiten Teilgehäuse 15 über axiale Bolzen 18 verspannt ist und das seinerseits über Axialbolzen 19 abgedichtet mit seiner Bodenwand 17 verschraubt ist. In dem dritten Teilgehäuse 16 ist ein zweiter Sperrflüssigkeitsraum 20 ausgebildet; alle drei Teilgehäuse 12, 15, 16 sind mit miteinander fluchtenden Bohrungen zum Durchgang der Wellenenden 10 ausgebildet, die in noch zu beschreibender Weise abgedichtet sind. Das dritte Teilgehäuse 16 und damit die ganze Vorrichtung ist über ringsum verteilt angeordnete Bolzen 21 an einer Sockelscheibe 22 aufgehängt, die über Nivellierschuhe 23 auf einer eine entsprechende Durchgangsöffnung 25 aufweisenden Deckenkonstruktion oder einem entsprechenden Träger 24 abgestützt ist und auf der ein Antriebsmotor 26 angeordnet ist. Der Antriebsmotor 26 treibt ein innerhalb der Durchgangsöffnung 25 liegendes, an der Sockelscheibe 22 hängend befestigtes Verteilergetriebe 27 an, das zehn den einzelnen Wellen 1 zugeordnete und achsparallel zu diesen angeordnete Abtriebswellenzapfen 28 aufweist, von denen jeder über eine Kupplungsmuffe 29 lösbar, aber drehfest mit einem zugeordneten Wellenende 10 gekuppelt ist. Das Verteilergetriebe 27 ist derart ausgelegt, daß der Antriebsmotor 26 den Wellen 1 über das Verteilergetriebe 27 eine gleichsinnige Drehbewegung gleicher Drehzahl erteilt.

Eine an dem dritten Teilgehäuse 16 stirnseitig angeordnete Kranöse 290 gestattet es, nach dem Lösen der Verschraubungen 30 der Bolzen 21 den in dem Gehäuse 6 und in den Teilgehäusen 12, 15, 16 enthaltenen Teil der Vorrichtung als Einheit von dem Verteilergetriebe 27 abzuziehen und bspw. einer Reinigung zuzuführen, was im einzelnen noch erläutert werden wird.

Die beiden scheibenförmigen Gehäuseabschnitte 7, 8 sind durch ringsum im Abstand verteilt angeordnete, achsparallele Säulen 31, die stirnseitig bei 32 mit den Gehäuseabschnitten 7, 8 verschraubt sind, axial gegeneinander verspannt sowie drehfest miteinander verbunden. Ringdichtungen 33, die durch Druckringe 34 und Axialbolzen 35 in Achsrichtung gegen die Gehäuseabschnitte 7, 8 verspannt sind, gewährleisten eine vakuumdichte Abdichtung zwischen dem Gehäusemantel 9 und den aufgesteckten Gehäuseabschnitten 7, 8.

Der zylindrische, bspw. aus Edelstahl bestehende Gehäusemantel 9 ist beheizbar. Zu diesem Zwecke ist er über den größten Teil seiner Länge doppelwandig ausgeführt; die Außenwand ist mit 36 bezeichnet, Die von ihr und dem Gehäusemantel 9 begrenzte, endseitig abgeschlossene Ringkammer ist mit nicht weiter dargestellten Zu- und Ablaufeinrichtungen für ein Wärmeträgermedium, bspw. Thermoöl, versehen. Durch entsprechende Regelung der Temperatur dieses Wärmeträgermediums kann die Heiztemperatur des Gehäusemantels 9 exakt auf einem vorbestimmten Wert gehalten oder entsprechend eines vorbestimmten Programmes gesteuert werden.

Der untere Gehäuseabschnitt 7 weist ein Gehäuseteil 37 auf, das durch einen Deckel 38 endseitig verschlossen ist und in dem den einzelnen Wellen 1 zugeordnete zylindrische Bohrungen 39 angeordnet sind, die in ihrem Bodenbereich über Stich- und Ringkanäle 40 mit einer nicht weiter dargestellten Abführeinrichtung für das Verarbeitungsgut verbunden sind Die Wellen 1 tragen an ihren in den Bohrungen 39 liegenden Enden drehfest aufgesetzte Förderschnecken 41, die mit geringem Spiel von den Bohrungswandungen umschlossen sind und das Verarbeitungsgut aus dem Reaktionsraum 4 in die Stich- und Ringkanäle 40 und von da zu der Abführeinrichtung fördern.

Jedes der Bearbeitungselemente 3 weist in der in der DE-PS 30 30 541 bzw. der älteren Patentanmeldung P 34 30 885.7 erläuterten Weise einen kreisförmigen Teil mit zwei einander gegenüberliegenden Planflächen, einem koaxial dazu angeordneten, ebenfalls scheibenartigen, im wesentlichen ovalen Teil und eine darauffolgende, ebenfalls koaxiale Abstandsscheibe auf. Dabei können zumindest abstandsweise die ovalen Scheibenteile auch durch lediglich kreisscheibenartige Bearbeitungselemente ersetzt oder mit diesen abwechselnd angeordnet sein. In jedem Falle greifen die Bearbeitungselemente, ähnlich Fig. 5, kämmend derart ineinander, daß zwischen gegeneinander sich bewegenden Stirn- und Umfangsflächen aller Teile miteinander zusammenwirkender Bearbeitungselemente jeweils enge Spalte vorbestimmter Weite (ca. 0,5 mm) ausgebildet sind.

Die Anordnung ist derart getroffen, daß der rohrförmige Gehäusemantel 9 mit seiner zylindrischen Innenwand unter Freilassung eines engen Spaltes bis an die zylindrische Umfangsfläche der Bearbeitungselemente 3 heranreicht. Die Weite dieses Spaltes beträgt ca. 0,5 mm und ist im übrigen im wesentlichen genauso groß wie die Weite der zwischen den Bearbeitungselementen 3 vorhandenen erwähnten Spalte. Die Innenwand des Gehäusemantels 9 erstreckt sich somit tangential zu den kreiszylindrischen Umfangsflächen der Bearbeitungselemente 3.

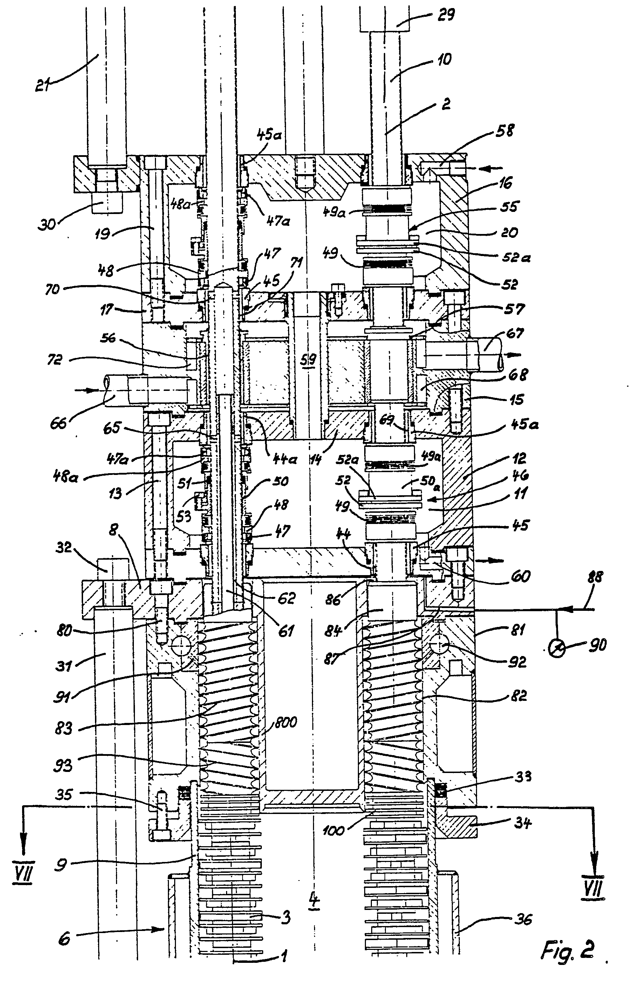

Die Abdichtung der durch den oberen Gehäuseabschnitt 8 nach außen zu durchgeführten Wellenenden 10 gegen das Gehäuse 6 ist in der insbesondere aus den Fig. 2 und 4-7 ersichtlichen Weise gestaltet:

In jede Durchgangsbohrung 44 für ein Wellenende 10 ist in dem oberen Gehäuseabschnitt 8 abgedichtet ein gehäusefestes, ringförmiges Dichtelement 45 einer Gleitringdichtung 46 eingesetzt, auf dessen Gleitfläche ein koaxialer Dichtring 47 über eine entsprechende Gleitfläche abgestützt ist, der über einen Druckring 48 und einen elastischen Metallfaltenbalg 49 mit Federvorspannung auf das Dichtelement 45 aufgedrückt ist.

Das Gleitringlager 46 ist als Doppellager ausgebildet; ein entsprechendes ringförmiges Dichtelement 45a ist in die zugeordnete Wellendurchgangsbohrung 44a der Wand 14 abgedichtet eingesetzt. Sein zugeordneter Dichtring ist mit 47a bezeichnet; er wird über einen Metallfaltenbalg 49a und einen Druckring 48a in Achsrichtung gegen das Dichtelement 45a angedrückt. Die beiden Falten bälge 49, 49a sind auf der einander zugewandten Seite jeweils gegen eine Druckbüchse 50 bzw. 50a abgestützt, wobei diebeiden Druckbüchsen 50, 50a in der aus Fig. 4 ersichtlichen Weise ineinandergreifen und in Achsrichtung gegen eine vorgepreßte Kohleringdichtung 51 verspannt sind. Zur Erzeugung dieser axialen Verspannung sind die beiden Druckbüchsen 50, 50a in der aus Fig. 5 ersichtlichen Weise jeweils mit einem Flansch 52 bzw. 52a versehen, der grundsätzlich die gleiche Gestalt wie eines der "ovalen" Bearbeitungselemente aufweist. Die Flansche 52, 52a benachbarter Wellen 1 können deshalb kämmend ineinandergreifen; sie sind bei jeder Welle durch Zugbolzen 53 miteinander verspannt und drehfest verbunden. Die Wellenenden 10 sind im übrigen mit einem Vielkeilprofil ausgebildet, über das sie mit den entsprechend ausgebildeten Druckbüchsen 50, 50a drehfest gekuppelt sind, derart, daß die Faltenbälge 49, 49a und die Dichtungsringe 48, 48a mit den Wellenenden 10 umlaufen.

Eine entsprechende, als Doppeldichtung ausgebildete Gleitringdichtung 55 ist in dem dritten Teilgehäuse 16 angeordnet, wobei gleiche Teile mit gleichen Bezugszeichen versehen sind, so daß sich eine nochmalige Erläuterung insoweit erübrigt.

Zwischen den beiden jeweils als Doppeldichtung ausgebildeten Gleitringdichtungen 46, 55 ist in dem zweiten Teilgehäuse 15 für jedes der Wellenenden 10 ein Radialgleitlager 56 vorgesehen, das eine radiale Führung der Wellen 1 in diesem Bereich ergibt und ein Ausknicken der Wellen verhütet. Ringschultern 57 gewährleisten dabei auch eine axiale Fixierung der Wellen 1 bezüglich des zweiten Teilgehäuses 15, wenn das Ganze an der Kranöse 290 angehoben wird.

In den in dem dritten Teilgehäuse 16 ausgebildeten zweiten Sperrflüssigkeitsraum 20 mündet ein Sperrflüssigkeits-Zufuhrkanal 58; er steht im übrigen über einen mittigen, das zweite Teilgehäuse 15 abgedichtet durchquerenden Kanal 59 mit dem ersten Sperrflüssigkeitsraum 11 in Verbindung, von dem aus ein Sperrflüssigkeits-Ablaufkanal 60 nach außen führt. Die beiden Sperrflüssigkeitsräume 11, 20 sind mit einer Sperrflüssigkeit, bspw. Öl, gefüllt und unter einem vorbestimmten Unterdruck gehalten. Damit wird erreicht, daß Sperrflüssigkeit nicht in die Atmosphäre austreten, sondern allenfalls etwas Luft in die Sperrflüssigkeitsräume 20, 11 über die obenliegenden Gleitringdichteinheiten 45a, 47a der Gleitringdichtung 55 eindringen kann und diese Dichtstellen zur Atmosphäre hin "trocken" bleiben.

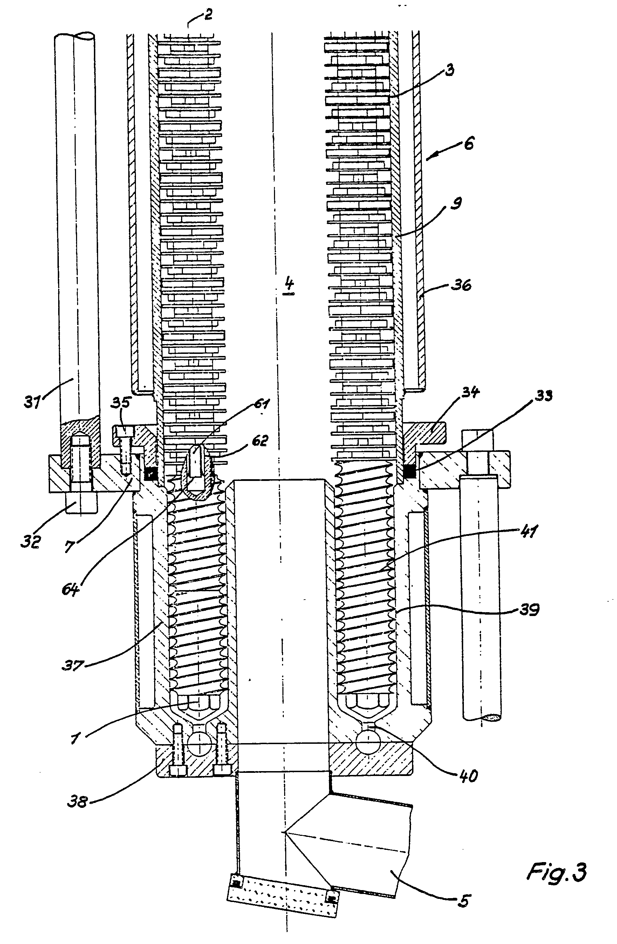

Die Wellen 1 sind hohlgebohrt; jede von ihnen enthält ein Axialröhrchen 61, das einen Ringraum 62 begrenzt und in der Nähe der Förderschnecken 39 bei 64 (Fig. 3) endet. In jeden der Ringräume 62 wird über Radialbohrungen 65 eine Wärmeträgerflüssigkeit, bspw. Öl, zur Kühlung der Wellen eingeleitet, das über einen Anschluß 66 in dem zweiten Teilgehäuse 15 zugeführt und von diesem über einen Anschluß 67 abgeführt wird. Die über den Anschluß 66 eintretende Wärmeträgerflüssigkeit strömt in einen Ringkanal 68 ein, der die Radiallager 56 teilweise umgibt, so daß eine Kühlung der Radiallager erfolgt. Aus dem Ringkanal 68 gelangt die Wärmeträgerflüssigkeit über Ringspalte 69 zu den Radialbohrungen 65 und damit in die Ringräume 62 der Wellen 1.

Die bei 64 umgelenkte Wärmeträgerflüssigkeit strömt über die Röhrchen 61 nach oben und tritt über Radialbohrungen 70 jeweils in einen Ringspalt 71 im Bereiche der zugeordneten Gleitringdichtung aus, von wo aus sie über den Innenraum des zweiten Teilgehäuses 15 und einen zweiten Ringraum 72 zu dem Ablauf-Anschlußstutzen 67 strömt. Der zweite Ringkanal 72 umgibt ebenfalls die Radiallager 56, mit dem Ergebnis, daß diese eine weitere Kühlung erfahren, wozu zu bemerken ist, daß die Wärmeträgerflüssigkeit trotz der in den Wellen 1 erfolgten Aufheizung immer noch eine zum Kühlen der Dichtungen und Lager ausreichend niedere Temperatur von ca. 300°C aufweist. Beim Durchströmen der Ringspalte 69, 71 erfolgt außerdem noch eine Kühlung der zugeordneten Elemente der Gleitringdichtungen 46 bzw. 55.

Von der über den Ringkanal 68 unter einem Druck von bspw. 3 bar zugeführten Wärmeträgerflüssigkeit kann über die Ringspalte 69 und die nachgeordneten Teile 47a, 45a der Gleitringdichtung 46 etwas Wärmeträgerflüssigkeit in den ersten Sperrflüssigkeitsraum 11 eintreten in dem ein wesentlich niedrigerer Druck herrscht. Dies ist erwünscht und unschädlich. In ähnlicher Weise kann Wärmeträgerflüssigkeit aus dem ablaufseitigen Ringkanal 72 über die Ringspalte 71 in den oberen oder zweiten Sperrflüssigkeitsraum 20 unter ihrem etwas kleineren Druck (bspw. 2 bar) gelangen, was ebenfalls unschädlich ist.

Schließlich wirken die Radiallager 56 als "Trennung" oder "Absperrung" zwischen dem Sperrflüssigkeits-Zu- und -Ablauf über die Ringkanäle 68, 72, wobei Leckagen in Kauf genommen werden, die einerseits relativ klein sind und damit von der Umwälzpumpe leicht bewältigt werden können und andererseits aber eine Schmierung der Radiallager 56 bewirken.

Auf der dem Reaktionsraum 4 zugewandten Seite weist der obere Gehäuseabschnitt 8 einen mittels Axialbolzen 80 abgedichtet angesetzten koaxialen Lagerteil 81 auf, in dem den einzelnen Wellen zugeordnete, zu diesen koaxiale zylindrische Bohrungen 82 ausgebildet sind und der mittels des Druckringes 34 abgedichtet mit dem Gehäusemantel 9 verbunden ist. Jede der Wellen 1 trägt eine drehfest aufgesetzte, in der zugeordneten Bohrung 82 liegende Förderschnecke 83, die sich in Achsrichtung an eine zylindrische Lagerbüchse 84 anschließt, die mit der Bohrungswandung einen kleinen Lager-Ringspalt begrenzt, der gemeinsam mit der Lagerbuchse 84 und der Bodenwand des ersten Teilgehäuses 12 Ringräume 86 begrenzt, in die Inertgaszufuhrkanäle 87 münden, welche mit einem gemeinsamen Inertgaszufuhranschluß 88 verbunden sind, der mit einer nicht weiter dargestellten Inertgasquelle in Verbindung steht. Ein Meßinstrument 90 gestattet es, die zuströmende Inertgasmenge zu überwachen.

Im Bereiche der Förderschnecken 83 münden in die Bohrungen 82 Stichkanäle 91, die von einem Ringkanal 92 ausgehen, der einen Teil einer Zuführeinrichtung für Verarbeitungsgut bildet, über die unter einem vorbestimmten Druck das Verarbeitungsgut zugeführt wird.

Wie aus Fig. 2 zu ersehen, münden die Stichkanäle 91 am Umfang der Förderschnecken 83 im Abstand einiger Schneckengänge von deren stirnseitigem Ende.

An die Förderschnecken 83 schließen sich in Richtung auf die Bearbeitungswerkzeuge 3 zu jeweils Rückförderschnecken 93 an, die ebenfalls zumindest großenteils innerhalb der Bohrungen 82 liegen und drehfest mit den Wellen 1 verbunden sind. Die Rückförderschnecken 93 weisen eine zu den Förderschnecken 83 entgegengesetzte Steigung ihrer Schneckengänge auf, so daß sie bei im Betriebssinne angetriebenen Wellen 1 bestrebt sind, das von den Förderschnecken 83 in Richtung auf den Reaktionsraum 4 geförderte Verarbeitungsgut in der entgegengesetzten Richtung zu fördern. Da die axiale Länge der Förderschnecken 83 größer ist als die der Rückförderschnecken 93, überwiegt der Förderdruck, mit dem Ergebnis, daß die Förderschnecken 83 das geförderte Verarbeitungsgut durch die Schneckengänge der gegensinnig wirkenden Rückförderschnecken 93 "hindurchschieben". Gleichzeitig wird aber im Bereiche der Schneckengänge der Förderschnecken 83 das Verarbeitungsgut unter einen vorbestimmten Druck gesetzt.

Dieser Druck wird dazu benutzt, das die Wellen 1 anschließend an die untere Teil-Gleitringdichtung 45, 47 in dem Raum 86 umgebende Inertgaspolster durch das Verarbeitungsgut selbst zu dem Reaktionsraum 4 hin abzudichten. Der Druck des über die Zuleitung 88 aufrecht erhaltenen Inertgaspolsters ist höher als der Druck der Sperrflüssigkeit in der anschließenden Sperrflüssigkeitskammer 11, mit dem Ergebnis, daß keine Sperrflüssigkeit über die Teil-Gleitringdichtung 45, 47 in die Bohrungen 82 und von dort in den Reaktionsraum 4 gelangen kann.

Es wird vielmehr etwas Inertgas (bspw. Stickstoff) in den Sperrflüssigkeitsraum 11 eindringen, von wo aus es mit der Sperrflüssigkeit unschädlich abgeführt wird.

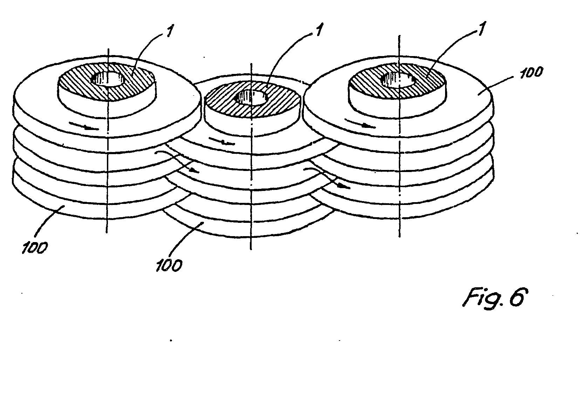

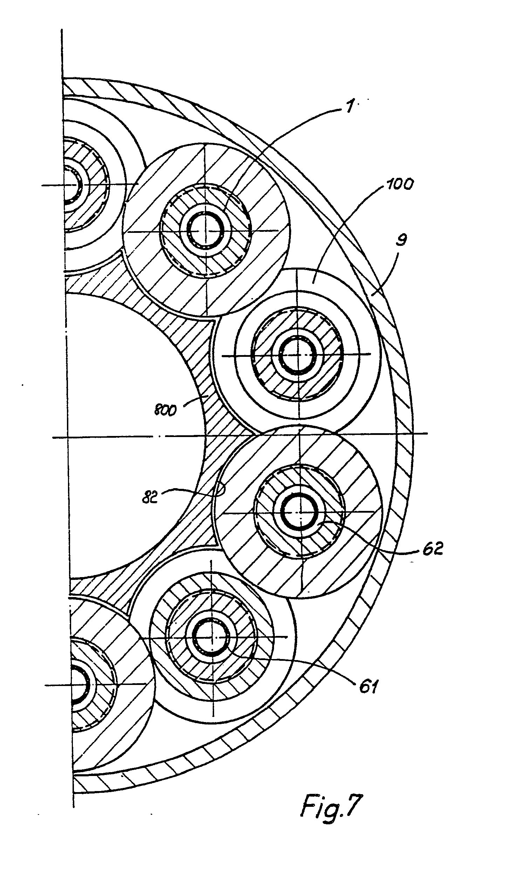

In dem Bereich, in dem die Wellen 1 aus den Bohrungen 82 austreten, sitzen auf jeder Welle eine Anzahl (4) in Achsrichtung im Abstand stapelartig übereinander angeordneter Kreisringscheiben 100, die in der aus Fig. 6 ersichtlichen Weise kämmend derart ineinandergreifen, daß zwischen jeweils benachbarten Flächen zusammenwirkender Scheiben enge Spalte genau vorbestimmter Weite (ca. 0,5 mm) ausgebildet sind. Wie insbesondere aus den Fig. 2 und 7 zu entnehmen, erstrecken sich dabei die Wandungen der Bohrungen 82 auf der dem Reaktionsraum 4 zugewandten Innenseite in Achsrichtung etwa bis zur Mitte jedes Stapels von Scheiben 100, während auf der Außenseite der benachbarte Gehäusemantel 9 sich über die gesamte Axiallänge eines solchen Scheibenstapels erstreckt. Zwischen den Scheiben 100 und dem Gehäusemantel 9 ist dabei ein zweckentsprechender Raum freigelassen.

Im Betrieb wird, wie bereits erwähnt, über das zugeführte Inertgas bei jeder Welle 1 anschließend an die von den Gleitringdichtungen 46 gebildeten Dichtmittel ein Inertgaspolster in den Bohrungen 82 aufrecht erhalten, das zu dem Reaktionsraum 4 durch das von den Rückförderschnecken 93 unter Druck gesetzte Verarbeitungsgut selbst abgedichtet ist. Der Inertgasverbrauch ist gering und im wesentlichen konstant; sollte er plötzlich ansteigen, deutet dies auf einen Schaden in der Abdichtung hin, der eine Wartung erforderlich macht.

Das über die Rückförderschnecken 93 hinweg geförderte Verarbeitungsgut wird von den ineinanderkämmenden Scheiben 100 zu Dünnschichten ausgebreitet, die die zwischen den Scheiben 100 selbst und zwischen diesen und der Wandung der Bohrungen 82 vorhandenen dünnen Spalte vollständig ausfüllen und damit die Abdichtung des Inertgaspolsters noch verbessern. Das unter Druck stehende Inertgaspolster unterstützt seinerseits die Förderwirkung der Förderschnecken 83.

Gleichzeitig verhindern die Scheiben 100, daß Verarbeitungsgut in dickeren Schichten in den Reaktionsraum 4 gelangt. Aus diesem Grunde sind auch die Wandungen der Bohrungen 82 auf der dem Reaktionsraum zugewandten Seite lediglich bis etwa zur Hälfte der axialen Länge der Scheibenstapel vorgezogen.

Da die bis zu ca. 350°C heiß werdende Wärmeträgerflüssigkeit den Wellen 1 in dem Bereich zwischen dem Reaktionsraum 4 bzw. dem Gehäuse 6 und dem Verteilergetriebe 27 radial zu- und von diesen radial abgeführt wird, ergibt sich der Vorteil, daß das Verteilergetriebe 27 von der Wärmeträgerflüssigkeit nicht aufgeheizt werden kann und im übrigen die in dem Verteilergetriebe 27 enthaltenen Ritzelgetriebe nicht durch Bohrungen geschwächt werden müssen, die Kanäle für die Wärmeträgerflüssigkeit bilden. Damit können auch in dem Verteilergetriebe 27 Axiallager angeordnet werden.

Die ganze Konstruktion bietet darüber hinaus den Vorzug, daß der von dem Gehäuse 6 umschlossene eigentliche Reaktor von dem aus dem Antriebsmotor 26, dem Verteilergetriebe 27 und den Wellenkupplungen 29 etc. bestehenden Antrieb als Einheit abgenommen werden kann, wie dies bspw. zu Reinigungszwecken erforderlich sein kann. Zum Beispiel bei Stromausfall ist der ganze Reaktor von Verkokung bedroht. Um hier Abhilfe zu schaffen, kann zunächst der in dem Gehäuse 6 angeordnete Reaktor nach Lösen der Schraubverbindungen 30 von dem erwähnten Antrieb abgenommen werden, worauf nach Lösen des Druckringes 34 sowie der Schraubenbolzen 32 die Wellen 1 mit dem von den Teilgehäusen 12, 15, 16 und dem oberen Gehäuseabschnitt 8 gebildeten "Dichtungskopf" an der Kranöse 290 nach oben zu aus dem Gehäuse 6 herausgezogen werden können.

Auf diese Weise ist es möglich, entweder den Reaktor insgesamt in ein Salzbald zu stecken, oder aber die Wellen 1 zusammen mit dem Dichtungskopf und das Gehäuse 6 getrennt voneinander in dem Salzbad zu reinigen oder gegebenenfalls nachzureinigen.

Da die Gleitringdichtungen 46, 55 für eine durch die Metallfaltenbälge 49, 49a vorgegebene Dauertemperatur von ca. 450°C ausgelegt sind und das für die statischen Gehäuseabdichtungen verwendete Dichtungsmaterial (Reingraphit) bis 1100°C temperaturbeständig ist, ist die Reinigung in einem Salzbad, dessen Temperatur üblicherweise bei ca. 350°C liegt, ohne weiteres möglich, was einen besonderen Vorteil darstellt. Gerade bei Kurzzeitpolymerisationen, die nur wenige Minuten in Anspruch nehmen, kann nämlich ein Stromausfall dazu führen, daß die Wellen 1 und insgesamt der ganze Reaktor binnen kurzem in verkoktem Polymeren regelrecht "eingegossen" wird, mit der Ergebnis, daß seine Teile ohne Zerstörung oder Beschädigung nicht mehr demontiert werden können. Nur eine Reinigung im Salzbad kann hier noch Abhilfe schaffen; diese ist aber gerade bei der geschilderten Konstruktion ohne weiteres möglich.

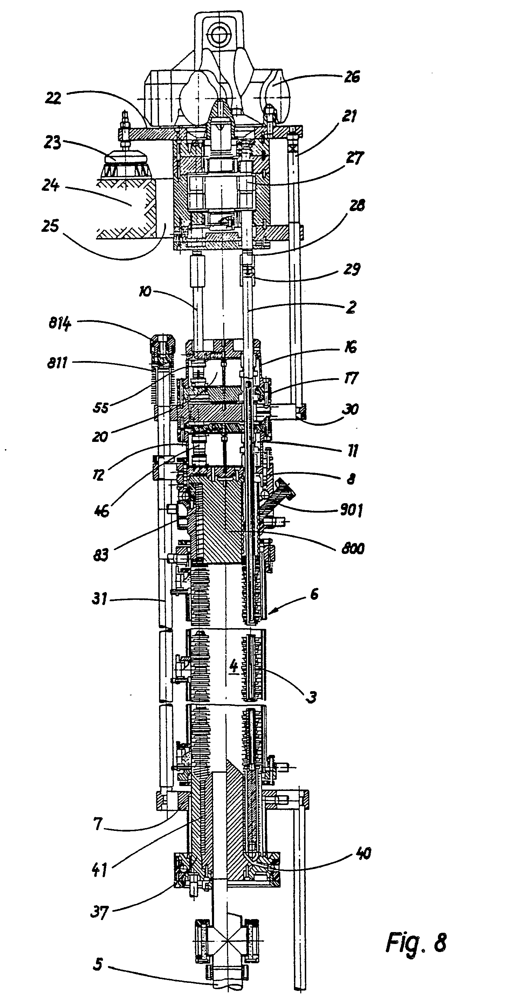

Die in den Fig. 8-12 dargestellte abgewandelte Ausführungsform eines Reaktors entspricht im wesentlichen der anhand der Fig. 1-7 beschriebenen ersten Ausführungsform. Gleiche oder entsprechende Teile sind deshalb mit gleichen Bezugszeichen bezeichnet, wobei sich insoweit eine nochmalige Erläuterung erübrigt. Außerdem sind in die Fig. 8-12 der besseren Übersichtlichkeit wegen lediglich die wesentlichen Bezugszeichen eingetragen.

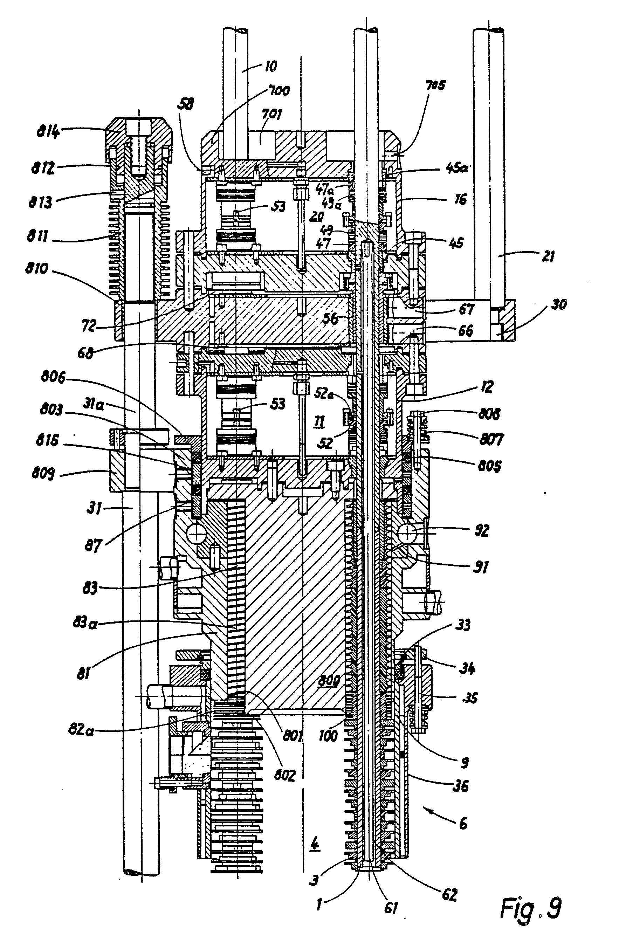

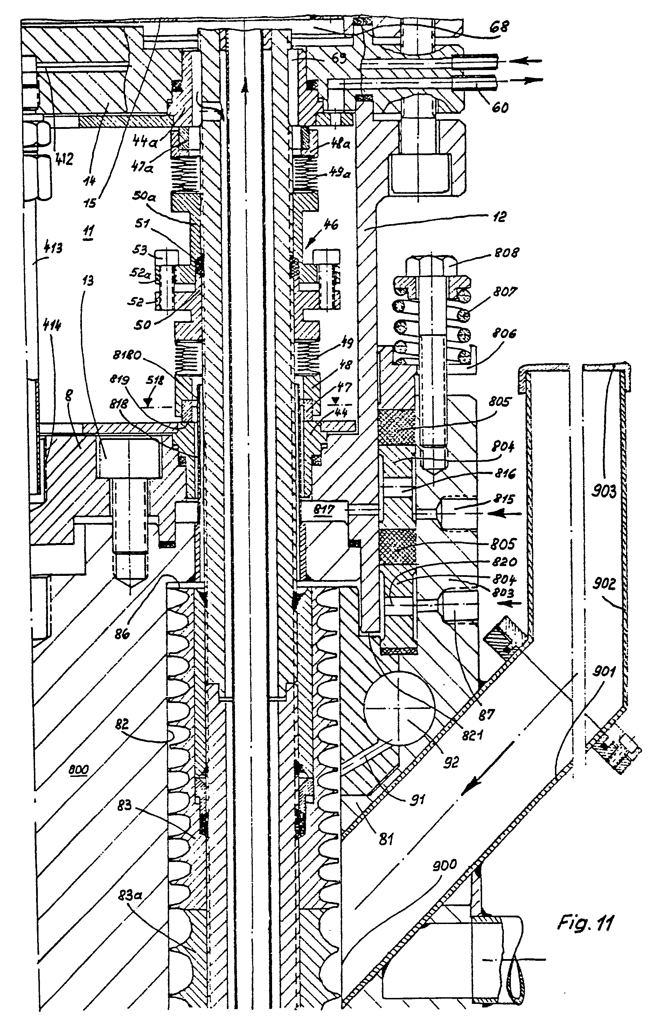

Während bei der ersten Ausführungsform nach den Fig. 1-7 der obere scheibenförmige Gehäuseabschnitt 8 einstückig ausgebildet und insgesamt ortsfest angeordnet ist, ist bei der abgewandelten Ausführungsform nach den Fig. 8-12 der obere Gehäuseabschnitt 8 mehrteilig und teilweise axial verschieblich ausgebildet. Ähnlich wie Fig. 2, weist der Gehäuseabschnitt 8 ein von den kranzartig angeordneten Wellen 1 umschlossenes Innenteil 800 auf, an dessen Umfang in der aus Fig. 7 ersichtlichen Weise die den einzelnen Wellen 1 zugeordneten, zu diesen koaxialen, zylindrischen Bohrungen 82 über einen Teil ihres Umfanges ausgebildet sind. Auf den Gehäuseabschnitt 8 ist außerdem wiederum das den ersten Sperrflüssigkeitsraum 11 enthaltende hohle, im wesentlichen zylindrische Teilgehäuse 12 abgedichtet aufgesetzt, das mittels entsprechender axialer Bolzen 13 mit dem Gehäuseabschnitt verspannt und damit ortsfest gehalten ist. Das zu dem Gehäuseabschnitt 8 koaxiale Lagerteil 81, das das Innenteil 800 und das zylindrische Teilgehäuse 2 ringartig außen umgibt, ist auf der zylindrischen Außenwand des Teilgehäuses 12 abgedichtet axial verschieblich gelagert. Es begrenzt auf seiner den Förderschnecken 83 zugewandten Innenseite, gemeinsam mit dem Innenteil 800, die Bohrungen 82, wobei die Anordnung aber in der aus Fig. 9 ersichtlichen Weise derart getroffen ist, daß das Lagerteil 81 eine kürzere axiale Länge als das Innenteil 800 aufweist, derart, daß bei in der in Fig. 9 veranschaulichten einen Grenzstellung stehendem Lagerteil 81 dessen dem Reaktionsraum 4 zugewandte Stirnfläche 801 im axialen Abstand von der benachbarten Stirnfläche 802 des Innenteils 800 verläuft. Zur Lagerung und Führung des Lagerteiles 81 dient ein angeformter, koaxialer Lagerring 803, der sich, bezogen auf Fig. 11, von dem Lagerteil 81 aus axial nach oben erstreckt und gegen die zylindrische Außenfläche des Teilgehäuses 12 über Zwischenringe 804 radial abgestützt ist, zwischen denen, ebenso wie zwischen den Zwischenringen 804 und dem Lagerteil 81 sowie einem Druckring 806, elastische Dichtringe 805 angeordnet sind. Der Druckring 806 ist über Druckfedern 807 und Spannbolzen 808 über die Dichtringe 805 axial gegen die Zwischenringe 804 verspannt, so daß sich eine flüssigkeitsdichte Schiebeführung ergibt. Außerdem trägt das Lagerteil 81 rings um seinen Umfang verteilt angeordnete, radial vorstehende Lageraugen 809, in denen die die beiden Gehäuseabschnitte 7, 8 miteinander starr verbindenden achsparallelen Säulen 31 verankert sind. Wenigstens eine der Säulen 31 ist axial verlängert und mit einem angeformten Achsstummel 31a verbunden, der in einem zweiten ortsfesten Lagerauge 810 verschieblich und abgedichtet gelagert ist, auf das ein Druckzylinder 811 aufgesetzt ist, in den der als Kolben ausgebildete Achsstummel 31a ragt. Der Zylinder 811 ist durch einen Zylinderkopf 812 abgeschlossen, dem über eine Druckmediumsleitung 813 Druckmedium zuführbar ist, das den Achsstummel 31a axial beaufschlagt, wobei die Druckbeaufschlagung durch ein in dem Zylinderkopf 812 vorgesehenes Stellventil 814 beeinflußbar ist. Durch entsprechende Betätigung des Stellventiles 814 kann somit über den Achsstummel 31a das die Förderschnecken 83 radial außen umgebende Lagerteil 81 zusammen mit dem unteren Gehäuseabschnitt 7, d.h. dem Gehäuse 6, auf einem durch Anschläge begrenzten Hubweg bezüglich der Wellen 1 stufenlos axial verstellt werden.

Der an dem Innenteil 800 ausgebildete Wandungsteil der Bohrungen 82 erstreckt sich in der aus Fig. 9 ersichtlichen Weise etwas über die Mitte de axialen Länge des aus den Scheiben 100 gebildeten Scheibenstapels, der somit in die jeweilige Bohrung 82 hinein sich erstreckt, derart, daß die im axialen Abstand angeordneten Kreisringscheiben 100 Drosselelemente für das von der Förderschnecke 83 geförderte Verarbeitungsgut bilden. Die Drosselwirkung des Scheibenstapels kann nun dadurch verändert werden, daß das den äußeren Wandungsteil der Bohrungen 82 enthaltende Lagerteil 81 in der beschriebenen Weise axial verstellt wird. In der in Fig. 9 dargestellten oberen Grenzstellung sind die Kreisringscheiben 100 über den größten Teil der Stapellänge im Bereiche der in dem Lagerteil 81 ausgebildeten Wandungsabschnitte der Bohrung 82 außen freigelegt, so daß das Verarbeitungsgut in den verhältnismäßig großen Teil Ringspalt 82a ungehindert austreten kann. Wird das Lagerteil 81, bezogen auf Fig. 9, axial weiter nach unten verstellt, so rückt seine Stirnkante 801 ebenfalls weiter nach unten, womit der erweiterte Ringspalt 82a axial verkürzt und damit die von dem Scheibenstapel ausgeübte Drosselwirkung auf das geförderte Verarbeitungsgut erhöht wird.

Auf diese Weise ist es möglich, den Rückdruck des Verarbeitungsgutes im Bereiche des Inertgaspolsters an die Viskosität des jeweiligen Verarbeitungsgutes anzupassen.

Bei der Ausführungsform nach den Fig. 8-12 ist die gegenläufige Förderschnecke 93 der Ausführungsform nach den Fig. 1-8 weggelassen und durch eine mit der Förderschnecke 83 gleichsinnig fördernde Förderschnecke 83a ersetzt, deren Fördergänge aber einen größeren Querschnitt aufweisen als jene der Förderschnecke 83, was im einzelnen noch erläutert werden wird. Grundsätzlich wäre es natürlich möglich, auch bei dieser Ausführungsform auf jeder Welle zur Erzeugung des zur Abdichtung des Inertgaspolsters erforderlichen Rückdrucks des Verarbeitungsgutes in den Bohrungen 82 gegenläufige Förderschnecken 93 den Förderschnecken 83 nachzuordnen.

Um die miteinander zusammenwirkenden Gleitringdichtflächen an dem ringförmigen Dichtelement 45 und dem zugehörigen Dichtring 47 des der Förderschnecke 83 benachbarten Gleitringlagers 46 zu schmieren und damit eine trockene Reibung und davon herrührenden übermäßigen Verschleiß zu verhüten, wird diesen Gleitringlagern dauernd eine Schmierflüssigkeit, insbesondere Öl, zugeführt. Zu diesem Zwecke ist in dem Lagerring 803 ein Schmierflüssigkeitszuführkanal 815 ausgebildet, der über einen beidseitig in axiale Verteilernuten mündenden Durchgangskanal 816 in dem zugeordneten Zwischenring 804 und einen in dem Teilgehäuse 12 ausgebildeten Zulaufkanal 817 in einen Ringkanal 818 führt, welcher von einer die jeweilige Welle 1 im radialen Abstand umgebenden Leithülse 8180 (Fig. 11) und der Innenwandung der Bohrung des Dichtelementes 45 begrenzt ist und zu den Gleitringdichtflächen bei 819 führt. Der Ringraum 86 ist wiederum mit Inertgas beaufschlagt, dessen Zufuhrkanal 87 über einen beidseitig in axiale Verteilerkanäle mündenden Durchgangskanal 820 in dem benachbarten Zwischenring 804 und einen mit diesem in Verbindung stehenden Ringkanal 821 mit Inertgas beaufschlagt ist, derart, daß jede der Wellen 1 in bereits erwähnter Weise im Bereiche ihrer Gleitringdichtung 46 anschließend an die Förderschnecke 83 von einem Inertgaspolster umgeben ist, wie dies im einzelnen bereits erläutert wurde.

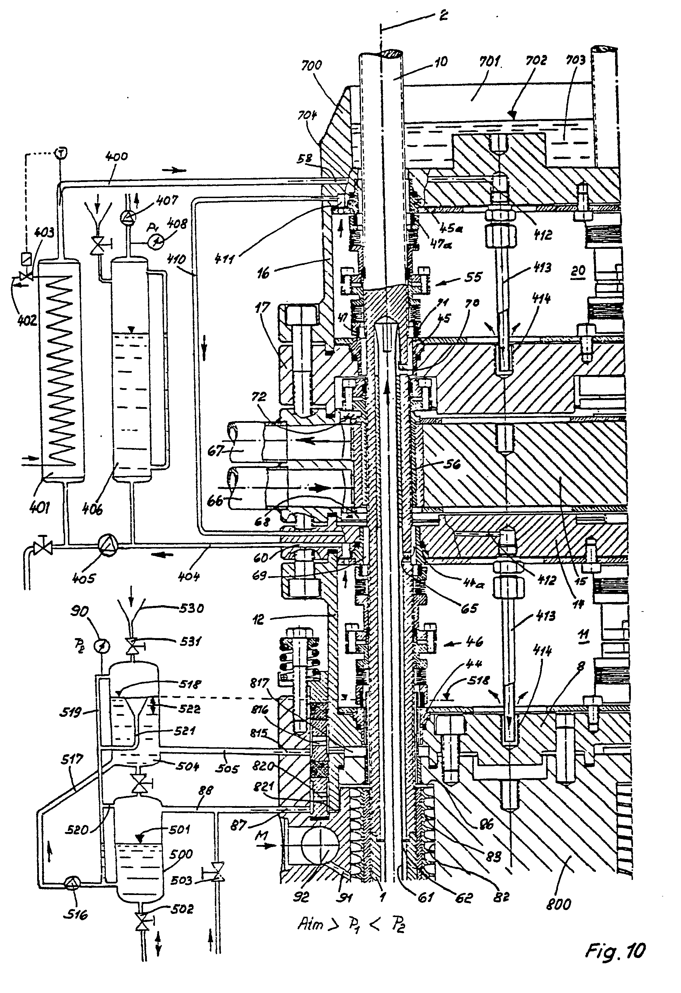

Wie aus Fig. 10 zu ersehen, ist die an den Inertgaszufuhrkanal 87 angeschlossene Inertgaszufuhrleitung 88 an ein erstes Schmierflüssigkeitsgefäß 500 angeschlossen, derart, daß sie oberhalb des bei 501 angedeuteten Schmierflüssigkeitsspiegels mündet. Das Schmierflüssigkeitsgefäß 500 ist auf seiner Unterseite über ein Ventil 502 mit einem nicht weiter dargestellten Schmierflüssigkeitsvorratsbehälter verbunden, von dem aus bedarfsgemäß eine inerte, bis etwa 280°C beständige Schmierflüssigkeit zugeführt werden kann. Von der Inertgaszufuhrleitung 88 zweigt über ein Regelventil 503 eine zu einer nicht dargestellten Inertgasquelle führende Stichleitung ab. Das Regelventil 503 gestattet es, selbsttätig den jeweils erforderlichen Inertgasdruck aufrecht zu erhalten.

Oberhalb des unteren Schmierflüssigkeitsgefäßes 500 ist ein oberes, ebenfalls teilweise mit Schmierflüssigkeit gefülltes zweites Schmierflüssigkeitsgefäß 504 angeordnet, das in seinem unteren Bereich einerseits über eine Leitung 505 mit dem Schmierflüssigkeitszufuhrkanal 815 und andererseits über eine eine Umwälzpumpe 516 enthaltende Leitung 517 mit dem unteren Bereich des unteren Schmierflüssigkeitsgefäßes 500 in Verbindung steht. Auf der Saugseite der Umwälzpumpe 516 zweigt eine in den Raum oberhalb des Flüssigkeitsspiegels 518 des oberen Schmierflüssigkeitsgefäßes 504 mündende Verbindungsleitung 519 ab, die bei 520 mit dem oberhalb des Flüssigkeitsspiegels 501 liegenden Raum des unteren Schmierflüssigkeitsgefäßes 500 verbunden ist und an die das den Inertgasdruck p2 anzeigende Druckmeßinstrument 90 angeschlossen ist. Von der Verbindungsleitung 519 zweigt eine in den Flüssigkeitsraum des oberen Schmierflüssigkeitsgefäßes 504 geführte, endseitig trichterförmig mündende Überlaufleitung 521 ab, die die Höhe des Flüssigkeitsspiegels 518 bestimmt. Die Überlaufleitung 521 ist mit ihrer den Flüssigkeitsspiegel 518 bestimmten Mündung höhenverstellbar, wie dies durch einen Doppelpfeil 522 angedeutet ist.

Über die Leitungen 88 und 519 ist die in den beiden Schmierflüssigkeitsgefäßen 500, 504 enthaltene Schmierflüssigkeit jeweils mit dem Druck des Inertgaspolsters beaufschlagt. Die Umwälzpumpe 516 fördert die Schmierflüssigkeit dauernd im Kreislauf, so daß in dem oberen Schmierflüssigkeitsgefäß 504 dauernd der durch die Höhenlage der Mündung des Überlaufrohres 521 bestimmte Flüssigkeitsspiegel 518 aufrecht erhalten bleibt.

Die Höhe dieses Flüssigkeitsspiegels 518 ist derart gewählt, daß sie immer oberhalb der Gleitringdichtflächen 819 steht, wie dies aus Fig. 11 zu ersehen ist.

Auf diese Weise ist sichergestellt, daß die Gleitringdichtflächen bei 819 stets mit Schmierflüssigkeit versorgt sind. Zwischen den Gleitringdichtflächen austretende Schmierflüssigkeit gelangt in den Sperrflüssigkeitsraum 11, wo sie zusammen mit der Sperrflüssigkeit abgeführt wird. Der Druck p2, unter dem die Schmierflüssigkeit steht, ist größer als der Atmosphärendruck und durch den Druck des Inertgaspolsters bestimmt.

Die Schmierung der zwischen dem ringförmigen Dichtelement 44a und dem Dichtring 47a jedes Gleitringlagers 46 sowie der zwischen dem Dichtelement 45 und dem zugeordneten Dichtring 47 jedes oberen Gleitringlagers 55 vorhandenen Gleitringdichtflächen, erfolgt, wie bei dem Ausführungsbeispiel nach den Fig. 1-7, durch die die hohlgebohrten Wellen 1 durchströmende Wärmeträgerflüssigkeit (Wärmeträgeröl), die über den Anschluß 66 in dem zweiten Teilgehäuse 15 zugeführt und von diesem über den Anschluß 67 abgeführt wird (Fig. 10). Die Verhältnisse sind insoweit gleich wie bei der ersten Ausführungsform. Es wird deshalb auf die Erläuterungen auf Seite 23ff verwiesen. Wie bereits erwähnt, sind gleiche oder entsprechende Teile beider Ausführungsformen mit gleichen Bezugszeichen versehen.

Zur Schmierung der Gleitringdichtflächen zwischen dem Dichtelement 45a und dem zugeordneten Dichtring 47a jedes der oberen Gleitringlager 55 ist schließlich noch eine eigene Schmierflüssigkeitsversorgung vorgesehen. Zu diesem Zwecke ist das auf das zweite Teilgehäuse 15 aufgesetzte dritte Teilgehäuse 16 im Bereiche seiner oberen Wand mit einem ringsumlaufenden Ringflansch 700 versehen, der einen alle Wellen 1 im Bereiche deren Wellenenden 10 umschließenden Flüssigkeitsvorratsraum 701 umschließt, der bis zu einem Flüssigkeitsspiegel 702 (Fig. 10) mit Schmierflüssigkeit 703 gefüllt ist. Die Schmierflüssigkeit 703 dringt durch Schmierflüssigkeitskanäle 704 in den zugeordneten Dichtelementen 45a und den mit diesen zusammenwirkenden Dichtringen 47a zu den dazwischenliegenden Gleitringdichtflächen vor. Die zwischen den Gleitringdichtflächen durchtretende kleine Schmierflüssigkeitsmenge gelangt in den oberen Sperrflüssigkeitsraum 20, wo sie der Sperrflüssigkeit zugemischt wird, was unschädlich ist.

Der Schmierflüssigkeitsvorratsraum 701 kann im übrigen über nicht weiter dargestellte Leitungen auch an die Umwälzpumpe 516 (Fig. 10) angeschlossen sein, so daß die Schmierflüssigkeit 703 dauernd umgewälzt und bedarfsgemäß ergänzt wird. Die bei dieser Umwälzung aus dem Schmierflüssigkeitsvorratsraum 701 stetig abfließende Schmierflüssigkeit kann in den oberen Schmierflüssigkeitsbehälter 504 über einen Auffangtrichter 530 eintreten, der mit dem oberen Schmierflüssigkeitsbehälter 504 über ein Regelventil 531 in Verbindung steht. Der zugeordnete Leitungsanschluß 705 an dem Schmierflüssigkeitsvorratsraum 701 für die nicht weiter dargestellte Leitung ist in Fig. 9 veranschaulicht.

Die die Wellenenden 10 umgebende Schmierflüssigkeit 703 hat zusätzlich zu ihrer Schmierfunktion noch die Aufgabe, einen Geruchsverschluß fü d aus dem Teilgehäuse 16 austretenden Wellenendene 10 zu bilden. Die in den Sperrflüssigkeitsräumen 11, 20 enthaltene Sperrflüssigkeit enthält nämlich gewisse geruchsaktive Bestandteile, die durch das Atmen der Gleitringdichtungen 45a, 47a längs der Wellen 1 nach außen gelangen und zu einer Geruchsbelästigung in der Umgebung führen könnten.

Die Sperrflüssigkeitsversorgung der Sperrflüssigkeitsräume 11, 20 erfolgt bei der Ausführungsform nach den Fig. 8-12 in der Weise, daß die Sperrflüssigkeit dauernd im Kreislauf umgewälzt und dabei ständig gekühlt wird. Damit erfolgt eine kontinuierliche Wärmeabfuhr von den von der Sperrflüssigkeit umspülten Gleitringlager 46, 55.

Wie insbesondere aus Fig. 10 zu entnehmen, ist der Sperrflüssigkeits-Zufuhrkanal 58 zu dem oberen Sperrflüssigkeitsraum 20 über eine Leitung 400 an einen Wärmetauscher 401 angeschlossen, dessen Primärkreislauf 402 über einen bei 403 angedeuteten Temperaturregler so geregelt ist, daß die über die Leitung 400 abströmende Sperrflüssigkeit immer auf einem vorbestimmten Temperatursollwert gehalten bleibt. Der in der den unteren Sperrflüssigkeitsraum 11 begrenzenden Stirnwand 14 des ersten Teilgehäuses 12 ausgebildete Sperrflüssigkeits-Ablaufkanal 60 ist über eine Leitung 404 und eine Umwälzpumpe 405 mit dem zulaufseitigen Ende des Wärmetauschers 401 verbunden. In die Leitung 404 mündet auf der Saugseite der Umwälzpumpe 405 ein Sperrflüssigkeits-Vorratsbehälter 406, der an eine Vakuumpumpe 407 angeschlossen ist, die die Sperrflüssigkeit auf einem bei 408 angezeigten Unterdruck p1 hält. Dieser Unterdruck ist derart bemessen, daß der Druck p1, unter dem die Sperrflüssigkeit steht, kleiner als der Atmosphärendruck, und kleiner als der Druck p2 der Schmierflüssigkeit in den Schmierflüssigkeitsbehältern 500, 504 und des Inertgaspolsters ist.

Bie beiden Sperrflüssigkeitsräume 20, 11 sind im übrigen durch eine Verbindungsleitung 410 miteinander verbunden, die über einen auf der Oberseite des oberen Sperrflüssigkeitsraumes 20 mündenden Ablaufkanal 411 und einen Zufuhrkanal 412 an die beiden Sperrflüssigkeitsräume 20, 11 angeschlossen ist. In jedem der beiden Sperrflüssigkeitsräume 20, 11 ist der Zufuhrkanal 58 bzw. 412 mit einem den Sperrflüssigkeitsraum durchquerenden Zulaufrohr 413 verbunden, das in einer sackbohrungsartigen Ausnehmung 414 im Boden des jeweiligen Sperrflüssigkeitsraumes 20 bzw. 11 mündet, wobei die Anordnung derart getroffen ist, daß die aus dem Zufuhrrohr 413 austretende Sperrflüssigkeit sich vom Boden des Sperrflüssigkeitsraumes 20 bzw. 11 aus nach oben ausbreitet, wie dies in Fig. 10 durch Pfeile angedeutet ist. Da der Sperrflüssigkeits-Ablaufkanal 411 bzw. 60 jedes der beiden Sperrflüssigkeitsräume 20, 11 an dessen Oberseite mündet, wird auf diese Weise eine Längsdurchströmung der Sperrflüssigkeitsräume 20, 11 erzwungen.

Die Sperrflüssigkeitsräume 20, 11 sind über die Verbindungsleitung 410 hintereinander geschaltet. Grundsätzlich wäre auch eine Anordnung denkbar, bei der beide Sperrflüssigkeitsräume 20, 11 parallel zueinander geschaltet sind und über die Umwälzpumpe 405 und den Wärmetauscher 401 mit Sperrflüssigkeit versorgt werden.

Das über den Ringkanal 92 und die Stichkanäle 91 in die Bohrungen 82 eingebrachte und damit den Förderschnecken 83 zugeführte viskose Verarbeitungsgut wird, wie bereits erläutert, durch die Rückförderschnecken 93 (Fig. 2) und/oder die Kreisringscheiben 100 (Fig. 2, 9) unter einen vorbestimmten Rückdruck gesetzt, so daß es zusammen mit dem Inertgaspolster gleichzeitig eine Dichtfunktion übernehmen kann. Dabei besteht die Möglichkeit, den Förderschnecken 83 zusätzlich zu dem viskosen Verarbeitungsgut noch insbesondere feste Zusatzstoffe zuzusetzen, die in das Verarbeitungsgut — insbesondere Kunststoffschmelze — eingearbeitet werden. Solche Zusatzstoffe sind abhängig von dem Einsatzzweck des Verarbeitungsgutes, bspw. Stabilisatoren, Weichmacher, Antioxidanzien, Füllstoff, Farben, Fasern, Flammschutzmittel, Treibmittel usw. Bei der Kunststoffverarbeitung erlaubt es die Beigabe der Zusatzstoffe in dieser Verarbeitungsstufe, auf weitere, bisher erforderliche Aufschmelz- und Granuliervorgänge zu verzichten, wie sie bisher unter Verwendung eigener hierfür entwickelter Kompoundier-Maschinen erforderlich waren.

Zu diesem Zwecke mündet in der insbesondere aus Fig. 11 ersichtlichen Weise in wenigstens eine der Bohrungen 82 in Förderrichtung unterhalb des das Verarbeitungsgut zuführenden zugeordneten Stichkanals 91 bei 900 unter 45° zur Vertikalen eine Zusatzstoff-Zufuhrleitung 901, die mit einem trichterartigen Zusatzstoffbehälter 902 verbunden ist, der durch einen Deckel 903 vakuumdicht abgeschlossen ist. Der Zusatzstoff-Vorratsbehälter 902 kann nicht weiter dargestellte Dosiereinrichtungen enthalten, die eine mengenmäßig genau vorprogrammierte Zusatzstoff-Zugabe gewährleisten. Die in dem Vorratsbehälter 902 enthaltenen Zusatzstoffe sind durch den Deckel 903 vom Luftsauerstoff abgeschlossen. Der ganze Behälter und die Zufuhrleitung 901 stehen unter dem Druck des Inertgases, das, aus dem Inertpolster kommend, über die Gänge der Förderschnecke 83 hinweg bei 900 in die Zufuhrleitung 901 eindringt. Im übrigen kann auch ein unmittelbarer Anschluß des Vorratsbehälters 902 an die Inertgasquelle vorgesehen sein.

Da mit der Zugabe der Zusatzstoffe zu dem Verarbeitungsgut eine Volumenvergrößerung desselben eintritt, ist die Förderschnecke 82, etwa beginnend mit der Mitte der Mündungsöffnung bei 900, durch eine gleichsinnige Förderschnecke 83a größerer Gangweite ersetzt.

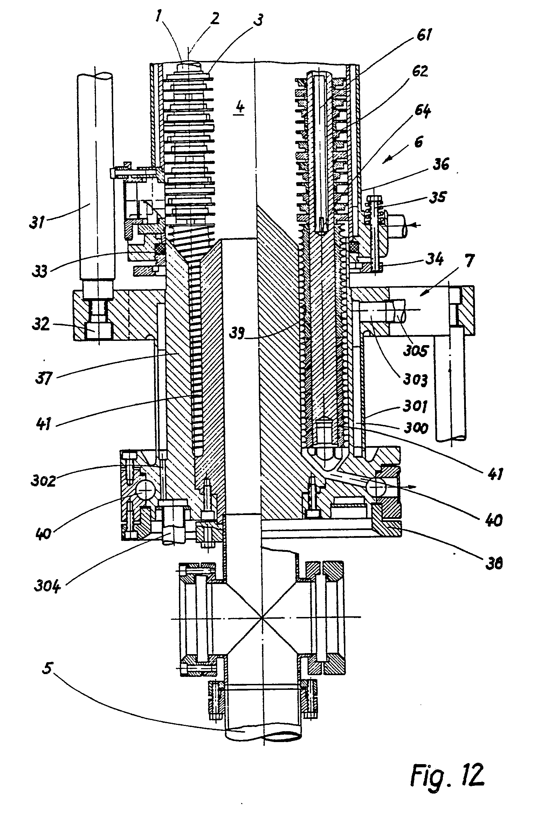

Der Austrag des gegebenenfalls mit den Zusatzstoffen versehenen bearbeiteten Verarbeitungsgutes aus dem Reaktionsraum 4 erfolgt bei den beiden Ausführungsformen nach den Fig. 1-7 und 8-12 in grundsätzlich gleicher Weise, wie ein Vergleich der in den Fig. 3 und 12 dargestellten unteren Geräteabschnitte zeigt. Da aber bei der Ausführungsform nach den Fig. 8-12 in bereits beschriebener Weise das Lagerteil 81 zusammen mit dem Gehäuse 6 über den Zylinder 811 (Fig. 9) bezüglich der Wellen 1 begrenzt längsverschieblich sowie über die Säulen 31 mit dem unteren Gehäuseabschnitt 7 verbunden ist, macht der untere Gehäuseabschnitt 7 eine solche zur Anpassung an Verarbeitungsgüter unterschiedlicher Viskosität vorgenommene Axialverstellungen des Lagerteiles 81 mit. Da die Förderschnecken 41 in den zugeordneten zylindrischen Bohrungen 39 axial verschieblich sind, ist diese Axialverstellung ohne weiteres möglich.

Im übrigen ist das untere Gehäuseteil 37 über den größten Teil der Axiallänge der in ihm verlaufenden Förderschnecken 41 unter Ausbildung eines Ringraumes 300 von einem Gehäusemantel 301 abgedichtet umgeben. Der Ringraum 300 ist über Kanäle 302, 303 mit einem Wärmeträger-Zulauf 304 und einem Wärmeträger-Ablauf 305 verbunden, so daß er dauernd mit einer Wärmeträgerflüssigkeit durchströmt werden kann, die es gestattet, das Verarbeitungsgut im Bereiche der Förderschnecken 41 und der Stich- und Ringkanäle 40 auf einer jeweils erforderlichen Temperatur zu halten. Bei Druckpolymerisation von Kunststoffen kann der Saugstutzen 5 nach außen zu abgeschlossen sein. Die Erfindung wurde in Vorstehenden anhand eines Reaktors mit kranzformig angeordneten, gleichsinnig, angetriebenen Wellen erläutert. Sie ist aber nicht auf Vorrichtungen dieser Art beschränkt.

**Patentansprüche**

1. Vorrichtung zur kontinuierlichen Verarbeitung hochviskoser Medien, insbesondere zur Herstellung hochmolekularer Polymere, beispielsweise der Kondensation von Polyester, die wenigstens zwei jeweils zusammenwirkende Bearbeitungswerkzeuge (3) tragende parallele Wellen (1) aufweist, denen Zu- und Abführeinrichtungen für das Verarbeitungsgut sowie ein mit Unterdruck beaufschlagbarer Reaktionsraum (4) zugeordnet sind, welcher auf wenigstens einer Seite durch einen Gehäuseabschnitt (8) begrenzt ist, der Durchführungseinrichtungen für die mit einem sie antreibenden, außen angeordneten Verteilergetriebe (72) kuppelbaren Wellen aufweist, wobei der Reaktionsraum im Bereiche der Wellendurchführungseinrichtungen über wenigstens eine Gleitringdichtung (46) enthaltende Dichtmittel gegen einen die Wellenenden (10) umgebenden, außen liegenden Sperrflüssigkeitsraum (11) abgedichtet ist, der eine Sperrflüssigkeit enthält, dadurch gekennzeichnet, daß auf der dem Reaktionsraum (4) zugewandten Seite, an die Dichtmittel (46, 55) anschließend, jede Welle (1) von einem Inertgaspolster umgeben ist, das einen höheren Druck als die Sperrflüssigkeit aufweist und gegen den Reaktionsraum (4) durch die Wellen (1) über einen Abschnitt ihrer Länge umgebende Gehäuseteile (81) sowie durch die Wellen (1) umgebendes, unter Druck stehendes Verarbeitungsgut abgedichtet begrenzt ist.

2. Vorrichtung nach Anspruch 1, dadurch gekennzeichnet, daß das Inertgaspolster jeweils anschließend an eine Gleitringdichtung (46) der Dichtmittel angeordnet ist.

3. Vorrichtung nach Anspruch 2, dadurch gekennzeichnet, daß das Inertgaspolster auf einem oberhalb der Gleitringdichtflächen (819) der Gleitringdichtung (46, 55) liegenden Flüssigkeitsspiegel einer die Gleitringdichtung versorgenden Schmierflüssigkeit wirksam ist.

4. Vorrichtung nach Anspruch 3, dadurch gekennzeichnet, daß sie einen Flüssigkeitsfördermittel (516) enthaltenden Kreislauf für die Schmierflüssigkeit aufweist, der mit dem Inertgaspolster und gegebenenfalls mit einer Inertgasquelle in Verbindung steht und über eine Einrichtung (521) zur Einstellung des Schmierflüssigkeitsspiegels bezüglich der Gleitringdicht-flächen (516) geführt ist.

5. Vorrichtung nach Anspruch 4, dadurch gekennzeichnet, daß der Kreislauf mit Einrichtungen (90; 502) zur Überwachung des Auftretens eines Schmierflüssigkeitsverlustes und zum Ersatz fehlender Schmierflüssigkeit verbunden ist.

6. Vorrichtung nach einem der Ansprüche 2-5, dadurch gekennzeichnet, daß das Inertgaspolster anschließend an die Dichtmittel (46, 55) in einem die Wellen (1) jeweils umgebenden Raum (86) ausgebildet ist, der mit einer Inertgasquelle in Verbindung steht und einseitig durch einen Ringspalt begrenzt ist.

7. Vorrichtung nach einem der vorhergehenden Ansprüche, dadurch gekennzeichnet, daß die Wellen (1) vorzugsweise im Bereiche ihres Austritts aus den sie umgebenden, mit den Zufuhreinrichtungen (91, 92) für das Verarbeitungsgut in Verbindung stehenden Gehäuseteilen (81, 800) Drossel- oder Rückförderelemente (100, 93) tragen, die dem ihnen in Wellenlängsrichtung zugeförderten Verarbeitungsgut entgegenwirken und durch die das Verarbeitungsgut in dem an das Inertgaspolster anschließenden Bereich unter einen vorbestimmten Rückdruck setzbar sind.

8. Vorrichtung nach Anspruch 7, dadurch gekennzeichnet, daß die Rückförderelemente (93) als von den Gehäuseteilen (81) zumindest teilweise umschlossene Förderschnecken ausgebildet sind, deren Gänge gegenläufig zu den Gängen von ihnen in den Gehäuseteilen (81) vorgeordneten koaxialen Förderschnecken (83) angeordnet sind, und daß der von den Förderschnecken (83) erzeugte Förderdruck größer ist als der von den Rückförderelementen (93) erzeugte Rückdruck.

9. Vorrichtung nach einen der Ansprüche 7 oder 8, dadurch gekennzeichnet, daß bei kranzartig angeordneten und mit ihren Bearbeitungselementen (3) kämmend ineinandergreifenden Wellen (1) die Wellen (1) im Bereiche ihres Austritts aus den sie umschließenden Gehäuseteilen (81) unter Ausbildung definierter Spalte miteinander kämmende, in axialem Abstand voneinander stapelartig angeordnete, als Drosselelemente wirkende, vorzugsweise kreisrunde Scheiben (100) tragen.

10. Vorrichtung nach Anspruch 9, dadurch gekennzeichnet, daß die Scheiben (100) jedes Stapels auf ihrer dem Reaktionsraum (4) zugewandten Innenseite lediglich über einen Teil der axialen Stapellänge von Gehäuseteilen umgeben sind.

11. Vorrichtung nach Anspruch 10, dadurch gekennzeichnet, daß die Scheiben (100) auf ihrer Außenseite über die gesamte axiale Stapellänge mit Spiel von Gehäuseteilen (9) umgeben sind.

12. Vorrichtung nach Anspruch 10, dadurch gekennzeichnet, daß die Scheiben (100) auf ihrer Außenseite über einen Teil ihrer axialen Stapellänge mit größerem radialem Abstand von Gehäuseteilen umgeben sind, als auf der Innenseite.

13. Vorrichtung nach einem der Ansprüche 9-12, dadurch gekennzeichnet, daß die Drosseloder Rückförderelemente (100; 93) umgebende Gehäuseteile (81) bezüglich der Drosseloder Rückförderelemente unter Veränderung des erzeugten Rückdruckes axial verstellbar sind.

14. Vorrichtung nach einem der vorhergehenden Ansprüche, dadurch gekennzeichnet, daß die Dichtmittel zwei in Achsrichtung hintereinander angeordnete Gleitringdichtungen (46, 55) aufweisen, von denen jeder ein Sperrflüssigkeit enthaltender Sperrflüssigkeitsraum (11, 20) zugeordnet ist.

15. Vorrichtung nach einem der vorhergehenden Ansprüche, dadurch gekennzeichnet, daß jeder Sperrflüssigkeitsraum (11, 20) eine in seinem unteren Teil mündende Sperrflüssigkeitszuführeinrichtung (413) und eine von seinem oberen Teil abgehende Sperrflüssigkeitsabführeinrichtung (60; 411) enthält und daß die Sperrflüssigkeitszu- und Abführeinrichtung in einem eine geregelte Kühleinrichtung (401) enthaltenden Sperrflüssigkeitskreislauf liegen, durch den die Sperrflüssigkeit umwälzbar ist.

16. Vorrichtung nach Anspruch 14, dadurch gekennzeichnet daß zwischen den beiden, Gleitringdichtungen (46, 55) für jedes Wellenende (10) ein Radiallager (56) angeordnet ist.

17. Vorrichtung nach Anspruch 15, dadurch gekennzeichnet, daß wenigstens ein Teil der Dichtelemente der Gleitringdichtungen (46, 55) zumindest teilweise von der Wärmeträgerflüssigkeit umströmt und gegebenenfalls im Bereiche der Gleitringdichtflächen mit dieser geschmiert ist.

18. Vorrichtung nach einem der vorhergehenden Ansprüche, dadurch gekennzeichnet, daß wenigstens eine Gleitringdichtung (46, 55) als Doppeldichtung mit zwei im axialen Abstand angeordneten gehäusefesten Dichtelementen (45, 45a) und zwei an diesen in Achsrichtung federnd angedrückten Dichtringen (47, 47a) ausgebildet sind, deren beide Dichtringe (47, 47a) axial federnd gegeneinander verspannt sind.

19. Vorrichtung nach Anspruch 18, dadurch gekennzeichnet, daß die beiden Dichtringe (47, 47a) jeweils über zwei Druckbüchsen, (50, 50a) axial verspannt sind, die durch Flansche (52, 52a) und axial zugängliche Spannschrauben (53) miteinander verbunden sind und daß die Flansche (52, 52a) benachbarter Wellen (1) sich mit Spiel aufeinander abwälzend ausgebildet und angeordnet sind.

20. Vorrichtung nach einen der vorhergehenden Ansprüche, dadurch gekennzeichnet, daß die antriebsseitigen Wellenenden (10) von Schmierflüssigkeit umgeben sind, deren Flüssigkeitsspiegel oberhalb der Gleitringdichtflächen einer Gleitringdichtung (55) liegen.

21. Vorrichtung nach einem der vorhergehenden Ansprüche, dadurch gekennzeichnet, daß in dem an das Inertgaspolster anschließenden Bereich auf die Zuführeinrichtung (91) für das Verarbeitungsgut folgend eine Zuführeinrichtung (901) für Zusatzstoffe mündet, die einen die Zusatzstoffe enthaltenden gasdichten Vorratsbehälter (902) aufweist, dessen Innenraum mit dem Druck des Inertgaspolsters beaufschlagt ist und mit diesem in Verbindung steht.

22. Vorrichtung nach einem der vorhergehenden Ansprüche, dadurch gekennzeichnet, daß die Wellen (1) gemeinsam mit den Dichtmitteln (46, 55) der Wellendurchführungseinrichtungen aus einem sie umschließenden Gehäuse (6) herausziehbar sind.

**Revendications**

1. Dispositif pour le traitement en continu de fluides très visqueux, en particulier pour la fabrication de polymères à masse moléculaire élevée, par exemple la condensation de polyester, qui présente au moins deux arbres (1) parallèles portant des outils de travail (3) coopérant les uns avec les autres et auxquels sont associés des dispositifs d'amenée et d'évacuation pour la matière de traitement ainsi qu'une chambre de réaction (4) qui peut être mise sous dépression et est délimitée sur au moins un côté par une partie de carter (8) qui présente des dispositifs de traversée pour les arbres pouvant être couplés à un engrenage (72) qui les entraîne et est disposé à l'extérieur, la chambre de réaction étant rendue étanche dans la zone des dispositifs de traversée des arbres par l'intermédiaire de moyens d'étanchéité contenant au moins un joint à anneau glissant (46), par rapport à une chambre à liquide d'arrêt (11) qui entoure les extrémités d'arbres (10), se trouve à l'extérieur et contient un liquide d'arrêt, caractérisé en ce que sur le côté tourné vers la chambre de réaction (4), à la suite des moyens d'étanchéité (46, 55), chaque arbre (1) est entouré par un coussin de gaz inerte qui présente une pression plus élevée que le liquide d'arrêt et est délimité avec effet d'étanchéité par rapport à la chambre de réaction (4) par des parties de carter (81) entourant les arbres (1) sur une partie de leur longueur ainsi que par de la matière de traitement sous pression entourant les arbres (1).

2. Dispositif selon la revendication 1 caractérisé en ce que le coussin de gaz inerte est disposé à la suite d'un joint à anneau glissant (46) des moyens d'étanchéité.

3. Dispositif selon la revendication 2, caractérisé en ce que le coussin de gaz inerte agit sur la surface d'un liquide de lubrification alimentant le joint à anneau glissant, dont le niveau se trouvant au-dessus des surfaces d'étanchéité (819) de l'anneau glissant du joint à anneau glissant (46, 55).

4. Dispositif selon la revendication 3, caractérisé en ce qu'il présente un circuit pour le liquide de lubrification qui contient des moyens d'acheminement de liquide (516), communique avec le coussin de gaz inerte et le cas échéant avec une source de gaz inerte et passe par un dispositif (521) de réglage du niveau de liquide de lubrification par rapport aux surfaces d'étanchéité (516) de l'anneau glissant.

5. Dispositif selon la revendication 4, caractérisé en ce que le circuit est relié à des dispositifs (90, 502) de surveillance de l'apparition d'une perte de liquide de lubrification et de remplacement de liquide de lubrification manquant.

6. Dispositif selon l'une des revendications 2 à 5, caractérisé en ce que le coussin de gaz inerte est formé à la suite des moyens d'étanchéité (46, 55) dans une chambre (86) qui entoure les arbres (1), communique avec la source de gaz inerte et est délimitée unilatéralement par une fente annulaire.

7. Dispositif selon l'une des revendications 1 à 6, caractérisé en ce que les arbres (1) portent, de préférence dans la zone de leur sortie des parties de carter (81, 800) qui les entourent et communiquent avec les dispositifs d'amenée (91, 92), des éléments de restriction ou de refoulement (100, 93) qui agissent à l'encontre de la matière de traitement amenée vers eux dans la direction longitudinale des arbres et par lesquels la matière de traitement peut être amenée, dans la zone faisant suite au coussin de gaz inerte, sous une contre-pression déterminée.

8. Dispositif selon la revendication 7, caractérisé en ce que les éléments de refoulement (93) sont réalisés sous la forme de vis transporteuses qui sont entourées au moins partiellement par les parties de carter (81) et dont les spires sont disposées en sens inverse des spires des vis transporteuses (83) coaxiales disposées dans les parties de carter (81) en amont desdites vis et en ce que la pression de transport produite par les vis transporteuses (83) est supérieure à la contre-pression produite par les éléments de refoulement (93).

9. Dispositif selon l'une des revendications 7 ou 8, caractérisé en ce que dans le cas d'arbres (1) disposés en couronne et dont les éléments de travail (3) s'interpénètrent, les arbres (1) portent dans la zone de leur sortie des parties de carter (81) qui les entourent, en tant qu'éléments de restriction, des disques (100) de préférence circulaires, empilés à distance axiale les uns des autres et s'interpénétrant les uns les autres en formant des fentes définies.

10. Dispositif selon la revendication 9, caractérisé en ce que les disques (100) de chaque pile sont entourés par des parties de carter sur leur côté intérieur tourné vers la chambre de réaction (4), uniquement sur une partie de la longueur axiale de la pile.

11. Dispositif selon la revendication 10, caractérisé en ce que les disques (100) sont entourés avec du jeu par des parties de carter (9) sur leur côté extérieur sur toute la longueur axiale de la pile.

12. Dispositif selon la revendication 10, caractérisé en ce que les disques (100) sont entourés sur leur côté extérieur, sur une partie de la longueur axiale de la pile, par des parties de carter avec un écartement radial plus grand que sur leur côté intérieur.

13. Dispositif selon l'une des revendications 9 à 12, caractérisé en ce que les parties de carter (81) entourant les éléments de restriction ou de refoulement (100, 93) sont réglables axialement par rapport aux éléments de restriction ou de refoulement avec modification de la contre-pression produite.

14. Dispositif selon l'une des revendications 1 à 13, caractérisé en ce que les moyens d'étanchéité présentent deux joints à anneau glissant (46, 55) disposés l'un derrière l'autre en direction axiale, une chambre de liquide d'arrêt (11, 20) contenant du liquide d'arrêt étant associée à chacun desdits joints.

15. Dispositif selon l'une des revendications 1 à 14, caractérisé en ce que chaque chambre de liquide d'arrêt (11, 20) contient un dispositif d'amenée de liquide d'arrêt (413) débouchant dans sa partie inférieure et un dispositif d'évacuation de liquide d'arrêt (60, 411) partant de sa partie supérieure et en ce que les dispositifs d'amenée et d'évacuation de liquide d'arrêt se trouvent dans un circuit de liquide d'arrêt qui contient un dispositif de refroidissement (401) réglé et par lequel peut circuler le liquide d'arrêt.

16. Dispositif selon la revendication 14, caractérisé en ce qu'un palier radial (56) est disposé entre les deux joints à anneau glissant (46, 55) pour chaque extrémité d'arbre (10).

17. Dispositif selon la revendication 15, caractérisé en ce qu'au moins une partie des éléments d'étanchéité des joints à anneau glissant (46, 55) est parcourue au moins partiellement par le liquide caloporteur et est lubrifiée le cas échéant avec ce dernier dans la zone des surfaces d'étanchéité de l'anneau glissant.

18. Dispositif selon l'une des revendications 1 à 17, carcatérisé en ce qu'au moins un joint à anneau glissant (46, 55) est réalisé sous forme de joint double avec deux éléments d'étanchéité (45, 45a) solidaires du carter et disposés à distance axiale l'un de l'autre et deux bagues d'étanchéité (47, 47a) serrées élastiquement contre ces derniers en direction axiale, les deux bagues d'étanchéité (47, 47a) étant serrées axialement et élastiquement l'une vers l'autre.

19. Dispositif selon la revendication 18, caractérisé en ce que les deux bagues d'étanchéité (47, 47a) sont serrées axialement par l'intermédiaire de deux douilles de pression (50, 50a) qui sont reliées entre elles par des brides (52, 52a) et des vis de serrage (53) accessibles axialement et en ce que les brides (52, 52a) d'arbres (1) voisins sont disposées et réalisées de manière à rouler l'une sur l'autre avec du jeu.

20. Dispositif selon l'une des revendications 1 à 19, caractérisé en ce que les extrémités d'arbres (10) côté entraînement sont entourées de liquide de lubrification dont le niveau de liquide se trouve au-dessus des surfaces d'étanchéité de l'anneau glissant d'un joint à anneau glissant (55).

21. Dispositif selon l'une des revendications 1 à 20, carcatérisé en ce qu'un dispositif d'amenée (901) pour des adjuvants faisant suite au dispositif d'amenée (91) pour la matière de traitement débouche dans la zone faisant suite au coussin de gaz inerte et présente un réservoir de stockage (902) étanche au gaz contenant les adjuvants dont l'espace intérieur est alimenté par la pression du coussin de gaz inerte et communique avec ce dernier.

22. Dispositif selon l'une des revendications 1 à 21, caractérisé en ce que les arbres (1) peuvent être extraits en même temps que les moyens d'étanchéité (46, 55) des dispositifs de traversée des arbres, d'un carter (6) les entourant.

**Claims**

1. An apparatus for the continuous processing of very viscous media, in particular for producing high molecular weight polymers, for example the condensation of polyester, having parallel shafts (1) having at least two cooperating processing tools (3), with which shafts feed and removal devices for the product to be processed and one reaction chamber (4) that can be subjected to a vacuum are associated, which chamber is defined on at least one side by a portion (8) of a housing that has ducting devices for the shafts that can be coupled with a distributor gear (72) driving them and disposed on the outside, wherein the reaction chamber, via sealing means containing at least one slide ring seal (46), is sealed off in the vicinity of the shaft ducting devices from a confining-liquid chamber (11) located on the outside and surrounding the shaft ends (10), which chamber contains a confining liquid, characterized in that on the side oriented toward the reaction chamber (4), adjoining the sealing means (46, 55) each shaft (1) is surrounded by a cushion of inert gas, which has a higher pressure than the confining liquid and is defined, in a manner sealed off from the reaction chamber (4), by means of housing parts (81) surrounding the shafts (1) over a portion of their length as well as by the product to be processed, which surrounds the shafts (1) and is under pressure.

2. An apparatus according to claim 1, characterized in that the inert gas cushion is disposed respectively adjoining one slide ring seal (46) of the sealing means.

3. An apparatus according to claim 2, characterized in that the inert gas cushion is effective on a fluid level, located above the slide ring seal surfaces (819) of the slide ring seal (46, 55), of a lubricant fluid supplying the slide ring seal.

4. An apparatus according to claim 3, characterized in that it has a circulation loop, containing a fluid pumping means (516), for the lubricant fluid, which loop communicates with the inert gas cushion and optionally with a source of inert gas and is extended via a device (521) for adjusting the lubricant fluid level with respect to the slide ring seal surfaces (516).

5. An apparatus according to claim 4, characterized in that the circulation loop is connected to devices (90; 502) for monitoring the occurrence of a loss of lubricant fluid and for replacing missing lubricant fluid.

6. An apparatus according to claims 2-5, characterized in that the inert gas cushion adjoining the sealing means (46, 55) is formed in a chamber (86) surrounding each of the shafts (1), which chamber communicates with a source of inert gas and is defined on one side by an annular gap.

7. An apparatus according to one of the preceding claims, characterized in that the shafts (1), preferably in the vicinity of their outlet from the housing parts (81, 800) surrounding them and communicating with the feed devices (91, 92) for the product to be processed, have throttling or reversing elements (100, 93), which act counter to the product to be processed and that is supplied to them in the longitudinal direction of the shafts, and by means of which the product to be processed can be subjected, in the vicinity adjoining the inert gas cushion, to a predetermined back pressure.

8. An apparatus according to claim 7, characterized in that the reversing elements (93) are formed as feed screws at least partly surrounded by the housing parts (81), the courses of the screws being located contrary to the courses of coaxial feed screws (93) located preceding them in the housing parts (81), and that the feed pressure generated by the feed screws (83) is greater than the backpressure generated by the reversing elements (93).

9. An apparatus according to claims 7 or 8, characterized in that with shafts (1) located in the manner of a ring and with their processing elements (3) intermeshing with one another, the shafts (1), in the vicinity of their outlet from the housing parts (81) surrounding them, have preferably circular-round discs (100) meshing with one another, forming defined gaps, the discs being located in stacked fashion and acting as throttling elements.

10. An apparatus according to claim 9, characterized in that the discs (100) of each stack are surrounded, on their inside oriented toward the reaction chamber (4), by housing parts over only a portion of the axial length of the stack.

11. An apparatus according to claim 10, characterized in that the discs (100) are surrounded on their outside, with play, by housing parts (9) over the entire axial length of the stack.

12. An apparatus according to claim 10, characterized in that the discs (100) are surrounded on their outside, over a portion of their axial stack length by housing parts spaced radially apart from them by a greater distance than on the inside.

13. An apparatus according to claims 9 to 12, characterized in that the housing parts (81) surrounding throttling or reversing elements (100; 93) are axially adjustable relative to the throttling or reversing elements, thereby varying the backpressure generated.

14. An apparatus according to one of the preceding claims, characterized in that the sealing means have two slide ring seals (46, 55) located one after the other in the axial direction, each of which having associated with it a confining-liquid chamber (11, 20) containing confining liquid.

15. An apparatus according to one of the preceding claims, characterized in that each confining-liquid chamber (11, 20) includes a confining liquid feed device (413) discharging into its lower portion and a confining liquid removal device (60; 411) leading away from its upper portion, and that the confining liquid feed and removal devices are located in a confining liquid circulation loop containing a regulated cooling device (401), by means of which loop the confining liquid can be recirculated.

16. An apparatus according to claim 14, characterized in that one radial bearing (56) for each shaft end (10) is located between the two slide wing seals (46, 55).

17 An apparatus according to claim 15, characterized in that at least a portion of the sealing elements of the slide rings seals (46, 55) is bathed at least partially by a fluid and is optionally lubricated with it in the vicinity of the slide ring seal surfaces.

18. An apparatus according to one of the preceding claims, characterized in that at least one slide ring seal (46, 55) is formed as a double seal having two sealing elements (45, 45a) integral with the housing and spaced axially apart from one another and two sealing rings (47, 47a) resiliently pressed against them in the axial direction, the two sealing rings (47, 47a) of which are braced axially resiliently against one another.

19 An apparatus according to claim 18, characterized in that the two sealing rings (47, 47a) are each axially braced via two thrust bushings (50, 50a), which are connected to one another by means of flanges (52, 52a) and axially accessible clamping screws (53), and that the flanges (52, 52a) of adjacent shafts (1) are so formed and located that they roll off with play on one another.

20. An apparatus according to one of the preceding claims, characterized in that the shaft ends (10) on the drive side are surrounded by lubricant fluid, the fluid levels of which are located above the slide ring seal surfaces of a slide wing seal (55).

21. An apparatus according to one of the preceding claims, characterized in that discharging in the vicinity adjoining the inert gas cushion, following the feed device (91) for the product to be processed, is a feed device (901) for additives, which has a gas-tight supply container (902) containing the additives, the interior of which container is subjected to the pressure of the inert gas cushion and communicates with this cushion.

22. An apparatus according to one of the preceding claims, characterized in that the shafts (1) are removable, together with the sealing means (46, 55) of the shaft ducting devices, from a housing (6) surrounding them.

17

Fig . 1

Fig. 2

Fig.3

Fig. 4

Fig. 5

Fig. 6

Fig.7

Fig. 8

Fig.9

Fig. 10

$Atm > P_1 < P_2$

Fig. 11

Fig. 12